# EUROPEAN PATENT APPLICATION

(11) **EP 4 738 085 A1**
(43) Date of publication of application: **06.05.2026**
(21) Application number: 24843279.1
(22) Date of filing: 23.05.2024
(51) Int. Cl.: G06F 3/04842, G06F 3/04817, G06F 9/451, G06F 1/16

(54) **ELECTRONIC DEVICE AND METHOD FOR DISPLAYING VISUAL OBJECT INDICATING EXECUTION OF SOFTWARE APPLICATION IN DISPLAY AREA**

(30) Priority: 17.07.2023 KR 20230092744; 20.07.2023 KR 20230094932; 04.08.2023 KR 20230102496
(71) Applicant: Samsung Electronics Co., Ltd., Suwon-si, Gyeonggi-do 16677 (KR)
(72) Inventor: KIM, Wankyu, Suwon-si, Gyeonggi-do 16677 (KR); OH, Boa, Suwon-si, Gyeonggi-do 16677 (KR); YIM, Soeyoun, Suwon-si, Gyeonggi-do 16677 (KR); SHIN, Jongwoo, Suwon-si, Gyeonggi-do 16677 (KR); OH, Jonghwa, Suwon-si, Gyeonggi-do 16677 (KR); YOO, Hyunwoo, Suwon-si, Gyeonggi-do 16677 (KR); LEE, Jaeho, Suwon-si, Gyeonggi-do 16677 (KR); HAN, Yonggil, Suwon-si, Gyeonggi-do 16677 (KR)
(74) Representative: HGF
(86) International application number: PCT/KR2024/007010
(87) International publication number: WO 2025/018557

(57) **Abstract**

At least one processor of an electronic device, according to one embodiment, is configured to display, when instructions are executed, a default screen in a first area of a cover display if the cover display is turned on by means of a user input or a system input. The at least one processor is configured to display, when the instructions are executed, a visual object indicating execution state information for updating, in real time or periodically, an operation of at least one software application being executed by the electronic device in a second area, which is a portion of the first area, such that the visual object overlaps the default screen.

## Description

### [Technical Field]

The present disclosure relates to an electronic device and a method for displaying a visual object indicating execution of a software application in an area of a display.

### [Background Art]

An electronic device having a deformable form factor is being developed using a flexible display. For example, an electronic device including a plurality of foldable housings may provide a user experience to a user based on a shape of the electronic device by using a flexible display disposed on the plurality of housings. For example, based on a shape of the flexible display that is folded or unfolded by external force from the user, the electronic device may change content displayed on the flexible display.

### [Disclosure]

### [Technical Solution]

In an electronic device according to an embodiment, the electronic device may comprise a housing including a first housing part and a second housing part rotatably coupled to the first housing part, a flexible display extending from a surface of the first housing part to a surface of the second housing part, a cover display located on another surface of the first housing part, at least one processor, and memory comprising one or more storage mediums storing instructions. The instructions, when executed individually or collectively by the at least one processor, may cause the electronic device to display a default screen in a first area of the cover display, when turning on the cover display is performed by a user input or a system input. The instructions, when executed individually or collectively by the at least one processor, may cause the electronic device to display, overlapping the default screen, a visual object indicating execution state information for updating an operation of at least one software application being executed in the electronic device in real time or periodically, in a second area that is a partial area of the first area.

In a method of an electronic device according to an embodiment, the method may comprise, when turning on a cover display is performed by a user input or a system input, displaying a default screen in a first area of the cover display. The method may comprise displaying, overlapping the default screen, a visual object indicating execution state information for updating an operation of at least one software application being executed in the electronic device in real time or periodically, in a second area that is a partial area of the first area.

In an electronic device according to an embodiment, the electronic device may comprise a housing including a first housing part and a second housing part rotatably coupled to the first housing part, a flexible display extending from a surface of the first housing part to a surface of the second housing part, a cover display located on another surface of the first housing part, the other surface being opposite to the surface on which the flexible display is located, at least one processor, and memory comprising one or more storage mediums storing instructions. The instructions, when executed individually or collectively by the at least one processor, may cause the electronic device to display, on the cover display, a second visual object indicating a first widget among a plurality of widgets provided from a plurality of software applications executed by the at least one processor, together with a first visual object indicating time, based on a specified condition, in a folded state in which the surface of the first housing part and the surface of the second housing part face each other. The instructions, when executed individually or collectively by the at least one processor, may cause the electronic device to, based on an input for the second visual object, cease displaying the second visual object on the cover display and display a third visual object corresponding to a second widget among the plurality of widgets.

In a method of an electronic device according to an embodiment, the method may comprise displaying, on a cover display, a second visual object indicating a first widget among a plurality of widgets provided from a plurality of software applications executed by at least one processor, together with a first visual object indicating time, based on a specified condition, in a folded state where a surface of a first housing part of the electronic device and a surface of a second housing part of the electronic device face each other. The method may comprise, based on an input for the second visual object, ceasing to display the second visual object on the cover display and displaying a third visual object corresponding to a second widget among the plurality of widgets.

In an electronic device according to an embodiment, the electronic device may comprise a housing including a first housing part and a second housing part rotatably coupled to the first housing part, a flexible display extending from a surface of the first housing part to a surface of the second housing part, a cover display located on another surface of the first housing part, the other surface being opposite to the surface on which the flexible display is located, at least one processor, and memory comprising one or more storage mediums storing instructions. The instructions, when executed individually or collectively by the at least one processor, may cause the electronic device to initiate execution of a first software application in an unfolded state that is distinguished from a folded state in which the surface of the first housing part and the surface of the second housing part face each other. The instructions, when executed individually or collectively by the at least one processor, may cause the electronic device to identify whether the first software application is linked with a second software application for managing widgets to be displayed on the cover display, based on identifying a change from the unfolded state to the folded state. The instructions, when executed individually or collectively by the at least one processor, may cause the electronic device to display a visual object indicating execution of the first software application in an area corresponding to a corner among corners of the cover display, in a first state in which the first software application is linked with the second software application. The instructions, when executed individually or collectively by the at least one processor, may cause the electronic device to display, on the cover display, a screen for linking the second software application and the first software application, in a second state that is distinguished from the first state.

### [Description of the Drawings]

FIG. 1 illustrates an example of a block diagram of an electronic device according to an embodiment.
FIGS. 2A and 2B illustrate an example of a positional relationship between a first housing part and a second housing part in an unfolding state and a folding state of an electronic device according to an embodiment.
FIGS. 3A and 3B illustrate an example of locations of a plurality of acceleration sensors in an electronic device according to an embodiment.
FIG. 4 illustrates an example of a flowchart indicating operations of an electronic device according to an embodiment.
FIG. 5 illustrates an example of an operation in which an electronic device according to an embodiment displays a visual object indicating execution of a software application on a cover display based on a specified setting.
FIG. 6 illustrates an example of a visual object indicating execution of a software application displayed on a cover display according to an embodiment.
FIGS. 7A to 7C illustrate an example of an operation in which an electronic device according to an embodiment displays at least one of visual objects corresponding to a plurality of software applications.
FIG. 8 illustrates an example of an operation in which an electronic device according to an embodiment temporarily ceases execution of a widget in response to a specified input for a visual object.
FIG. 9 illustrates an example of a visual object displayed on a cover display according to an embodiment.
FIGS. 10A and 10B illustrate an example of an operation for displaying at least one of visual objects corresponding to a plurality of software applications according to an embodiment.
FIG. 11 illustrates an example of an operation in which an electronic device according to an embodiment displays a visual object indicating execution of a software application on a cover display.
FIG. 12 illustrates an example of a flowchart indicating an operation of an electronic device according to an embodiment.
FIG. 13 illustrates an example of an operation in which an electronic device according to an embodiment displays a default screen.
FIG. 14 illustrates an example of an operation in which an electronic device according to an embodiment displays a widget screen.
FIG. 15 illustrates an example of a widget screen provided from a software application according to an embodiment.
FIG. 16 illustrates an example of a flowchart indicating an operation of an electronic device according to an embodiment.
FIG. 17 illustrates an example of an operation in which an electronic device according to an embodiment displays a visual object.
FIG. 18 is a block diagram of an electronic device in a network environment according to various embodiments.

### [Mode for Invention]

Hereinafter, various embodiments of the present document will be described with reference to the accompanying drawings.

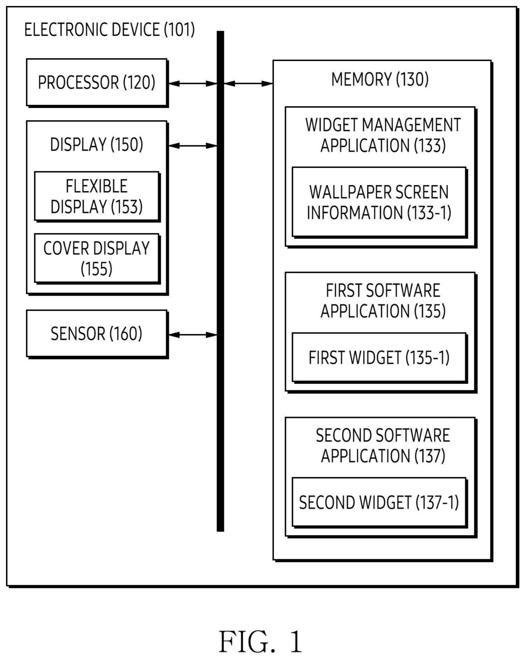

FIG. 1 illustrates an example of a block diagram of an electronic device according to an embodiment. Referring to FIG. 1, in an embodiment, in terms of being owned by a user, an electronic device 101 may be referred to as a terminal (or a user terminal). The terminal may include, for example, a personal computer (PC) such as a laptop and a desktop. The terminal may include, for example, a smartphone, a smartpad, and/or a tablet PC. The terminal may include a smart accessory such as a smartwatch and/or a head-mounted device (HMD).

According to an embodiment, the electronic device 101 may include at least one of a processor 120, memory 130, a display 150, or a sensor 160. The processor 120, the memory 130, the display 150, and the sensor 160 may be electronically and/or operably coupled with each other by an electronical component such as a communication bus. Although illustrated based on different blocks, an embodiment is not limited thereto. A type and/or the number of hardware components included in the electronic device 101 is not limited to those illustrated in the block diagram of FIG. 1. For example, the electronic device 101 may include only part of hardware exemplified based on the block diagram of FIG. 1.

According to an embodiment, the processor 120 of the electronic device 101 may include a hardware component for processing data based on one or more instructions. For example, the hardware component for processing data may include an Arithmetic and Logic Unit (ALU), a Floating Point Unit (FPU), a Field Programmable Gate Array (FPGA), an Application Processor (AP), and/or a Central Processing Unit (CPU). The number of processors 120 may be one or more. For example, the processor 120 may have a structure of a multi-core processor such as a dual core, a quad core, or a hexa core.

According to an embodiment, the memory 130 of the electronic device 101 may include a hardware component for storing data and/or an instruction inputted and/or outputted by the processor 120. The memory 130 may include, for example, a volatile memory, such as a Random-Access Memory (RAM), and/or a non-volatile memory, such as a Read-Only Memory (ROM). The volatile memory may include, for example, at least one of a Dynamic RAM (DRAM), a Static RAM (SRAM), a Cache RAM, and a Pseudo SRAM (PSRAM). The non-volatile memory may include, for example, at least one of a Programmable ROM (PROM), an Erasable PROM (EPROM), an Electrically Erasable PROM (EEPROM), a flash memory, a hard disk, a compact disc, and an Embedded Multi Media Card (eMMC).

According to an embodiment, the display 150 of the electronic device 101 may output visualized information to the user. For example, the display 150 may be controlled by a controller, such as a graphic processing unit (GPU) and output visualized information to the user. The display 150 may include a liquid crystal display (LCD), a plasma display panel (PDP), and/or one or more light emitting diodes (LEDs). The LED may include an organic LED (OLED). The display 150 may include electronic paper. The display 150 may have at least partially bent shape and/or may have a deformable shape.

According to an embodiment, the display 150 of the electronic device 101 may include a sensor (e.g., a touch sensor panel (TSP)) for detecting an external object (e.g., a finger of the user) on the display 150. For example, based on the TSP, the electronic device 101 may detect an external object in contact with the display 150 or floating on the display 150. In response to detecting the external object, the electronic device 101 may execute a function associated with a specific visual object corresponding to a position of the external object on the display 150 among visual objects being displayed in the display 150. The display 150 may include a flexible display 153 and/or a cover display 155 having at least partially bent shape and/or having a deformable shape.

According to an embodiment, the flexible display 153 and/or the cover display 155 of the electronic device 101 may be provided to output visualized information to the user, similar to the display 150. Among descriptions of the flexible display 153 and descriptions of the cover display 155, descriptions overlapping those of the display 150 are omitted for convenience of explanation. The cover display 155 may be referred to as a sub-display, an external display, or a front display.

For example, the cover display 155 may be disposed on a different side from a side of the electronic device 101 on which the flexible display 153 is disposed. A position of the cover display 155 may be disposed on a side of a housing viewable in a state where the flexible display 153 is covered (e.g., a folded state). The cover display 155 may be implemented similarly to the display 150. The cover display 155 may be referred to as a sub-display, an external display, or a front display. Among the descriptions of the cover display 155, descriptions overlapping those of the display 150 are omitted for convenience of explanation.

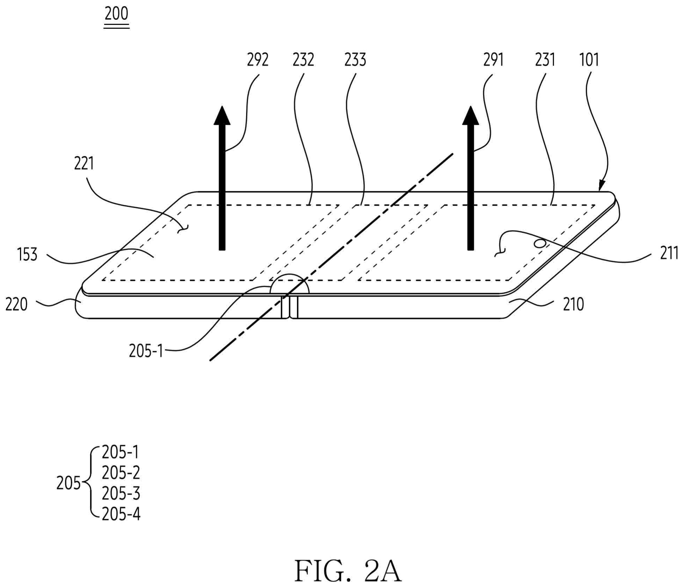

For example, a housing of the electronic device 101 may include a first housing part including a first side and a second side opposite the first side, and a second housing part including a third side and a fourth side opposite the third side. The electronic device 101 may include the flexible display 153 disposed on the first side of the first housing part and the third side of the second housing part. The electronic device 101 may include the flexible display 153 extending from the first side of the first housing part to the third side of the second housing part. The electronic device 101 may include the cover display 155 disposed on the second side of the first housing part. As an example, the electronic device 101 may include a camera (not illustrated) oriented in a direction in which the second side of the first housing part faces. For example, the electronic device 101 may identify an angle between the first housing part and the second housing part using the sensor 160. The electronic device 101 may identify a folded state, a sub-folded state, and/or an unfolded state based on the angle between the first housing part and the second housing part. An operation in which the electronic device 101 identifies a state based on the angle will be described later with reference to FIGS. 2A to 2B.

According to an embodiment, the sensor 160 of the electronic device 101 may generate electronic information that may be processed by the processor 120 and/or the memory 130 from non-electronic information associated with the electronic device 101. The electronic information generated by the sensor 160 may be stored in the memory 130, processed by the processor 120, and/or transmitted to another electronic device distinct from the electronic device 101. The number of sensors 160 may be one or more.

For example, the sensor 160 may include a Hall sensor for identifying an angle between housings included in the electronic device 101. The Hall sensor may include one or more magnets and/or one or more magnetic sensors. At least one of the one or more magnets or the one or more magnetic sensors included in the Hall sensor may be disposed at different positions in the electronic device 101. A positional relationship of the one or more magnets and/or the one or more magnetic sensors in the electronic device 101 may be changed according to a shape of the electronic device 101. The electronic device 101 may measure the change in the positional relationship through the one or more magnetic sensors. The change in the positional relationship may cause a change in a magnetic field formed by the one or more magnets. The electronic device 101 may obtain a power signal indicating the change in the magnetic field using the Hall sensor. For example, the electronic device 101 may distinguish a posture or a state (e.g., the folded state or the unfolded state) using the power signal obtained from the Hall sensor. For example, the electronic device 101 may receive data indicating a state of the electronic device 101 from the Hall sensor. For example, the Hall sensor may output data indicating a shape of the flexible display 153. The shape of the flexible display 153 may be changed by being folded or unfolded by a folding axis (e.g., a folding axis 237 to be described later in FIG. 2A). For example, the Hall sensor may output different data indicating the shape of the flexible display 153. An embodiment is not limited thereto, and the processor 120 according to an embodiment may identify the angle using an inertia measurement unit (IMU) sensor.

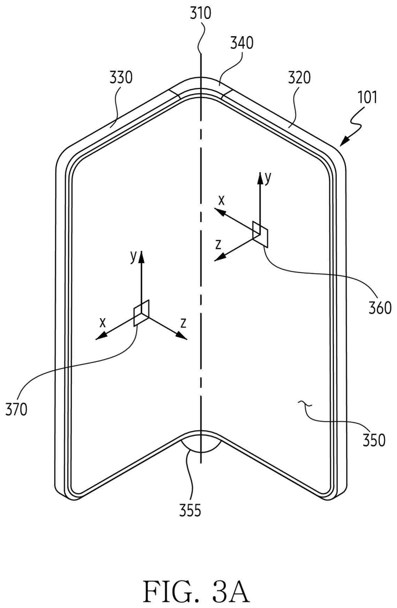

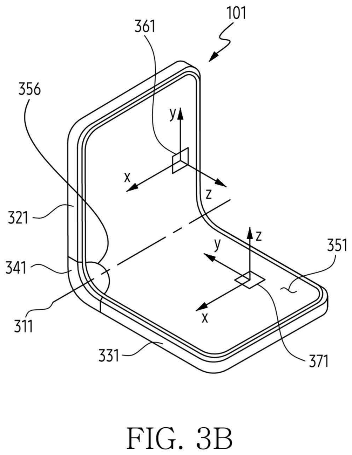

For example, the sensor 160 may include acceleration sensors (e.g., acceleration sensors 360, 361, 370, and 371 of FIGS. 3A and 3B) for measuring physical movement of the electronic device 101. The acceleration sensor may output electronic information indicating magnitude of gravitational acceleration measured at each of a plurality of specified axes (e.g., an x-axis, a y-axis, and a z-axis) perpendicular to each other. The processor 120 of the electronic device 101 according to an embodiment may measure a posture of the electronic device 101 in a physical space based on electronic information outputted from the acceleration sensor. The posture measured by the electronic device 101 may indicate an orientation of the electronic device 101 and/or a shape of the electronic device 101 measured by the acceleration sensor. The electronic device 101 may determine a mode of the electronic device 101 based on the measured posture. For example, the electronic device 101 may identify a mode corresponding to the posture of the electronic device 101 among specified modes including a landscape mode and a portrait mode as a plurality of specified modes.

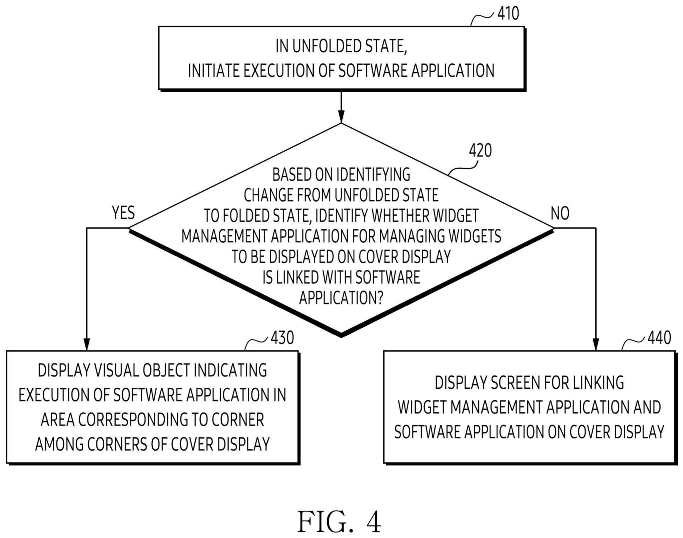

According to an embodiment, in the memory 130 of the electronic device 101, one or more instructions (or commands) indicating a computation and/or an operation to be performed by the processor 120 on data may be stored. A set of one or more instructions may be referred to as firmware, an operating system, a process, a routine, a sub-routine and/or an application. For example, the electronic device 101 and/or the processor 120 may perform at least one of operations of FIGS. 4, 12 or 16, when a set of a plurality of instruction distributed in a form of an operating system, firmware, a driver, and/or an application is executed. Hereinafter, an application being installed in the electronic device 101 may mean that one or more instructions provided in a form of an application are stored in the memory 130 of the electronic device 101, and that the one or more applications are stored in a format (e.g., a file having an extension specified by an operating system of the electronic device 101) executable by the processor 120 of the electronic device 101.

The electronic device 101 according to an embodiment may control display of at least one screen on the cover display 155 based on execution of a widget management application 133. The widget management application 133 may provide resources of a wallpaper screen, and the electronic device 101 may edit at least a portion of the wallpaper screen using the resources.

For example, the electronic device 101 may identify a wallpaper screen to be displayed on the cover display 155 using wallpaper screen information 133-1. The wallpaper screen may include a visual object indicating a time (e.g., a current time). The wallpaper screen may be referred to as a main screen, a cover screen, a home screen, a launcher screen, a defalut screen, , or a background screen. For example, the widget management application 133 may be referred to as a watch widget application in terms of including the visual object indicating a time. The widget management application 133 may be an example of an application provided by the operating system of the electronic device 101. The widget management application 133 may include a software application provided by the operating system to manage at least one widget executable through the cover display 155. The widget management application 133 may be referred to as a widget launcher application in terms of managing the at least one widget. However, it is not limited thereto. The widget management application 133 may be an example of an application (e.g., a clock face application) installed by the user to change a screen displayed on the cover display 155.

For example, the memory 130 of the electronic device 101 may include a plurality of software applications 135 and 137. The plurality of software applications 135 and 137 may be provided by a different user (or server) from the user of the electronic device 101. The plurality of software applications 135 and 137 may include a software application providing a type of widget (e.g., a widget associated with music, a widget associated with a timer, a widget associated with weather, and/or a widget associated with recording) executable by the widget management application 133 of the electronic device 101. For example, the widget may include a user interface (UI) element used to notify the user of at least one information. The electronic device 101 may provide at least one information to the user using the widget, or may perform at least one function using the widget.

For example, the electronic device 101 may cause execution of a plurality of widgets 135-1 and 137-1 provided by the plurality of software applications 135 and 137 installed in the electronic device 101 based on the execution of the widget management application 133. The electronic device 101 may edit each of the plurality of widgets 135-1 and 137-1 using the widget management application 133. The electronic device 101 may register the first widget 135-1 provided by the first software application 135 based on the execution of the widget management application 133. The electronic device 101 may register the first widget 135-1 in the widget management application 133 by linking the widget management application 133 and the first software application 135. The electronic device 101 may execute the first widget 135-1 registered using the widget management application 133.

For example, the electronic device 101 may use the widget management application 133 to display the second widget 137-1 of the second software application 137 on the cover display 155. The electronic device 101 may link the second software application 137 and the widget management application 133 to cause execution of the second widget 137-1 corresponding to the second software application 137, by using the widget management application 133. The electronic device 101 may display the second widget 137-1 in a user interface provided by the widget management application 133 by linking the widget management application 133 with the second software application 137.

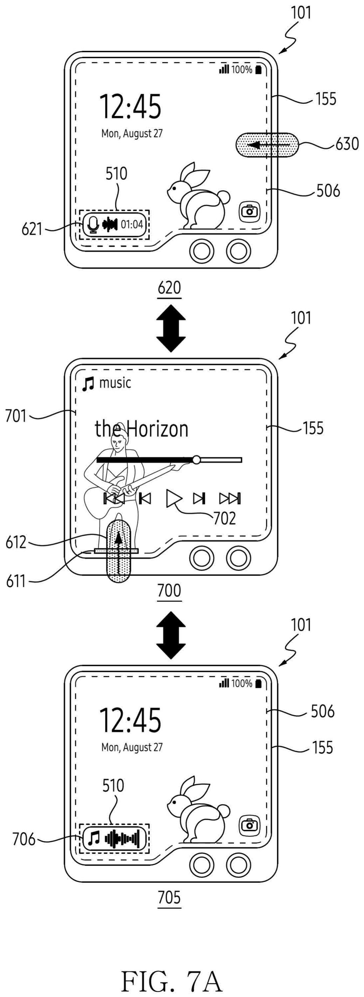

The electronic device 101 according to an embodiment may display, on the cover display 155, a visual object indicating execution of a widget (e.g., the first widget 135-1 or the second widget 137-1) corresponding to another software application (e.g., the first software application 135 or the second software application 137) by using the widget management application 133. In a case that a plurality of widgets are executed, the electronic device 101 may select at least one among a plurality of visual objects indicating execution of the plurality of widgets. With reference to FIGS. 7A to 7C, an example of operations for which the electronic device 101 selects the at least one will be described later.

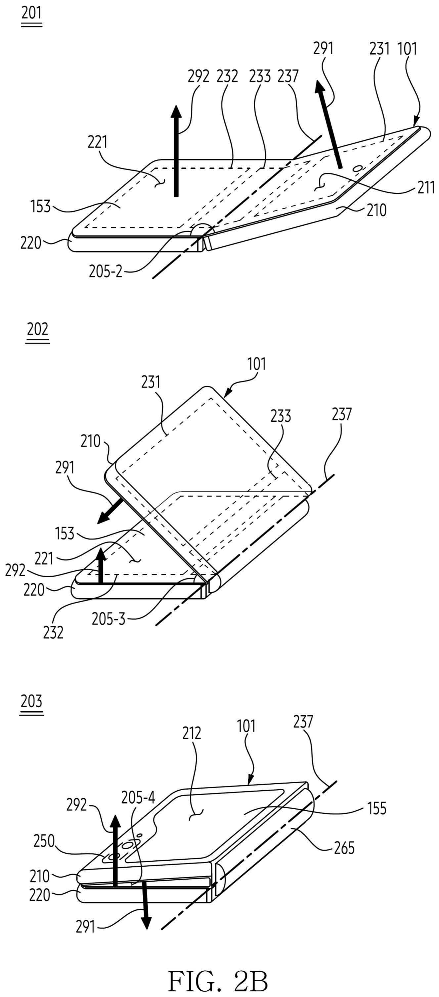

Hereinafter, an example of the state of the electronic device 101 identified according to the angle of the electronic device 101 will be described later with reference to FIGS. 2A and 2B.

FIGS. 2A and 2B illustrate an example of a positional relationship between a first housing part and a second housing part in an unfolding state and a folding state of an electronic device according to an embodiment. An electronic device 101 of FIGS. 2A and 2B may be referred to as the electronic device 101 of FIG. 1. A first housing part 210, a second housing part 220, and a folding housing part 265 may be included in a housing of the electronic device 101. The electronic device 101 may include the first housing part 210 including a first side 211 and a second side 212 opposite the first side. The electronic device 101 may include the second housing part 220 including a third side 221 and a fourth side (not illustrated) opposite to the third side. The electronic device 101 may include the folding housing part 265 pivotably connecting the first housing part 210 and the second housing part 220. The folding housing part 265 may include a rotatable hinge structure. The folding housing part 265 may be referred to as a hinge assembly in terms of including a hinge structure rotating the first housing part 210 and the second housing part 220. A relative position, angle, shape and/or distance of the first housing part 210 and the second housing part 220, which are rigid bodies, may be changed by an external force by the hinge assembly.

For example, at least a portion of a flexible display 153 may be disposed on a side (e.g., the first side 211) of the first housing part 210 and a side (e.g., the third side 221) of the second housing part. For example, at least a portion of the flexible display 153 may be disposed on the first side 211 and the third side 221 across the folding housing part 265. A first display area 231, a second display area 232, and a third display area 233 may be included in the flexible display 153. A cover display 155 may be disposed on the second side 212. The electronic device 101 may include a camera oriented in a direction in which the second side 212 faces. The camera may be disposed in a partial area 250 of the second side 212. For example, the area 250 may be referred to as a notch area from a viewpoint in which a camera is positioned. In the area 250, at least a portion of the cover display 250 may be positioned. For example, in a case that at least a portion of the cover display 250 is positioned in the area 250, a shape of the cover display 250 may correspond to a polygon (e.g., quadrangle). For example, in a case that at least a portion of the cover display 250 is positioned in the area 250, a camera hole may be positioned in the at least a portion. The camera hole may be used for transmitting light to a camera disposed in the at least a portion or outputting light from the camera. The camera positioned in the at least the portion may be referred to as an under display camera (UDC).

For example, another camera distinguished from the camera may be positioned on at least a portion of a surface (e.g., the first surface 211) of the first housing part 210 and a surface (e.g., the third surface 221) of the second housing part 220 on which the flexible display 153 is positioned.

According to an embodiment, the electronic device 101 may provide an unfolding state (or an unfolded state) where the first housing part 210 and the second housing part 220 are fully folded out by the folding housing part 265. For example, referring to FIG. 2A, the electronic device 101 may be in a state 200, which is the unfolding state. For example, the state 200 may refer to a state where a first direction 291 in which the first side 211 faces corresponds to a second direction 292 in which the third side 221 faces. For example, in the state 200, the first direction 291 may be parallel to the second direction 292. For example, in the state 200, the first direction 291 may be the same as the second direction 292.

According to an embodiment, in the state 200, the first side 211 may form substantially one plane with the third side 221. For example, in the state 200, an angle 205-1 between the first side 211 and the third side 221 may be 180 degrees. For example, the state 200 may refer to a state where all of an entire display area of the flexible display 153 may be provided on substantially one plane. For example, the state 200 may refer to a state where all of the first display area 231, the second display area 232, and the third display area 233 may be provided on one plane. For example, in the state 200, the third display area 233 may not include a curved surface. For example, the unfolding state may be referred to as an outspread state (or an outspreading state), a fully unfolded state, an opened state, an unfolded state, a flat state, and/or a planar state. Hereinafter, different states of the electronic device 101 based on angles 205-2, 205-3, and 205-4 will be described later.

Referring to FIG. 2B, the electronic device 101 according to an embodiment may provide a folding state (or a folded state) where the first housing part 210 and the second housing part 220 are folded in by the folding housing part 265. For example, the electronic device 101 may be in the folding state including a state 201, a state 202, and a state 203. For example, the folding state including the state 201, the state 202, and the state 203 may refer to a state where the first direction 291 in which the first side 211 faces is distinguished from the second direction 292 in which the third side 221 faces. For example, in the state 201, an angle between the first direction 291 and the second direction 292 is 45 degrees, and the first direction 291 and the second direction 292 may be distinguished from each other. For example, in the state 202, an angle between the first direction 291 and the second direction 292 is 150 degrees, and the first direction 291 and the second direction 292 may be distinguished from each other. For example, in the state 203, an angle between the first direction 291 and the second direction 292 is substantially 180 degrees, and the first direction 291 and the second direction 292 may be distinguished from each other.

According to an embodiment, in the folding state, an angle between the first side 211 and the third side 221 may be greater than or equal to 0 degrees and less than 180 degrees. For example, in the state 201, the angle 205-2 between the first side 211 and the third side 221 may be 135 degrees. In the state 202, the angle 205-3 between the first side 211 and the third side 221 may be 30 degrees. In the state 203, the angle 205-4 between the first side 211 and the third side 221 may be substantially 0 degrees. For example, the folding state may be referred to as a folded state, a fully folded state, and/or a closed state.

In an embodiment, unlike the unfolding state, the folding state may include a plurality of sub-folding states. For example, referring to FIG. 2B, the folding state may include the plurality of sub-folding states including the state 203, which is a fully folding state where the first side 211 is substantially overlapped on the third side 221 by rotation provided through the folding housing part 265, and the state 201 and the state 202, which are intermediate folding states between the state 203 and the unfolding state (e.g., the state 200 of FIG. 2A). For example, as the first side 211 and the third side 221 face each other by the folding housing part 265, the electronic device 101 may provide the state 203 where an entire area of the first display area 231 is substantially fully overlapped on an entire area of the second display area 232. For example, the electronic device 101 may provide the state 203 where the first direction 291 is substantially opposite to the second direction 292. For example, the state 203 may refer to a state where the flexible display 153 is occluded from a field of view of a user viewing the electronic device 101. For example, in the state 203 (e.g., a fully folded state), the flexible display 153 may be substantially occluded by a housing of the electronic device 101. However, it is not limited thereto.

According to an embodiment, the flexible display 153 may be bent by the rotation provided through the folding housing part 265. For example, in the flexible display 153, unlike the first display area 231 and the second display area 232, the third display area 233 may be bent according to a folding operation. For example, the third display area 233 may be in a curvedly bent state to prevent damage to the flexible display 153 in the fully folding state. In the fully folding state, unlike the third display area 233 being curvedly bent, all of the first display area 231 may be fully overlapped on all of the second display area 232.

Referring to FIGS. 3A to 3B, an example in which the flexible display 153 of the electronic device 101 includes one folding display area (e.g., the third display area 233) or the electronic device 101 includes one folding housing part (e.g., the folding housing part 265) is illustrated, but this is for convenience of explanation. According to embodiments, the flexible display 153 of the electronic device 101 may include a plurality of folding display areas. For example, the flexible display 153 of the electronic device 101 may include two or more folding display areas, and the electronic device 101 may include two or more folding housing parts to provide each of the two or more folding areas.

In the folding state, the electronic device 101 according to an embodiment may overlappingly display a plurality of visual objects on the cover display. An operation in which the electronic device 101 identifies an input designated for changing the order of a plurality of visual objects displayed in the folding state will be described in more detail with reference to FIGS. 7A to 7C.

Hereinafter, an exemplary description of an acceleration sensor for identifying a posture of the electronic device 101 will be described with reference to FIGS. 3A to 3B.

FIGS. 3A and 3B illustrate an example of positions of a plurality of acceleration sensors in an electronic device according to an embodiment. An electronic device 101 of FIG. 3A and an electronic device 101 of FIG. 3B may be an example of the electronic device 101 of FIG. 1. Referring to FIGS. 3A to 3B, examples of an electronic device distinguished by a shape and/or a structure of a housing part are illustrated. The electronic device of FIGS. 3A to 3B may be a terminal owned by different users. For example, the electronic device 101 may include housing parts (e.g., the first housing part 210 of FIG. 2A, the second housing part 220 of FIG. 2A, and the folding housing part 265 of FIG. 2A) deformable based on at least one folding axis. Acceleration sensors 360, 361, 370, and 371 may be included in the sensor 160 of FIG. 1. First housing parts 320 and 321 may be referred to the first housing part 210 of FIG. 2A. Second housing parts 330 and 331 may be referred to the second housing part 220 of FIG. 2A. Folding housing parts 340 and 341 may be referred to the folding housing part 265 of FIG. 2B. Folding axes 310 and 311 may be referred to the folding axis 237 of FIG. 2A. Flexible displays 350 and 351 may be referred to the flexible display 153 of FIG. 1.

Referring to FIG. 3A, a deformable housing of the electronic device 101 according to an embodiment may be distinguished by the folding housing part 340 including the folding axis 310, and the first housing part 320 and the second housing part 330 connected to the folding housing part 340. The flexible display 350 of the electronic device 101 according to an embodiment may be an example of a display disposed across the first housing part 320 and the second housing part 330.

According to an embodiment, the electronic device 101 may include the acceleration sensors 360 and 370 disposed in each of the first housing part 320 and the second housing part 330. The acceleration sensors 360 and 370 may be included in the electronic device 101 to measure a shape and/or a posture of the electronic device 101. Each of the acceleration sensors 360 and 370 may be included in a six-axis motion sensor including an acceleration sensor based on three axes of a +x-axis, a +y-axis, and a +z-axis of FIG. 3A, and a gyro sensor based on the three axes. The acceleration sensors 360 and 370 may identify acceleration applied to each of the three axes. The acceleration may be a vector based on a direction and/or magnitude of a net force applied to the electronic device 101. For example, the acceleration may be a vector indicating an amount of a change in speed of the electronic device 101 due to the net force. The net force applied to the electronic device 101 may include a combination of gravity or another force (e.g., a force applied to the electronic device 101 by a user holding the electronic device 101) distinguished from the gravity. According to an embodiment, the acceleration sensors 360 and 370 of the electronic device 101 may identify rotation of the acceleration sensor based on the one or more axes. According to an embodiment, the electronic device 101 may identify movement of the electronic device 101 based on the acceleration and/or the rotation identified by each of the acceleration sensors 360 and 370.

The electronic device 101 according to an embodiment may identify an angle 355 between the first housing part 320 and the second housing part 330 by using the acceleration sensors 360 and 370. Based on the angle 355, the electronic device 101 may identify a state (e.g., a folding state, an unfolding state, or a sub-unfolding state) of the electronic device 101. For example, in a state where the second housing part 330 is fixed, the electronic device 101 may obtain values of the three axes of the +x-axis, the +y-axis, and the +z-axis of FIG. 3A by using the acceleration sensor 360 included in the first housing part 330. The shape of the electronic device 101 according to an embodiment is not limited to an embodiment of FIG. 3A in which the folding axis 310 is formed parallel to a length among a width and the length shorter than the width of the flexible display 350.

Referring to FIG. 3B, an example of the electronic device 101 including the flexible display 351 having a width and a length longer than the width, and the folding axis 311 formed parallel to the width is illustrated. The deformable housing part of the electronic device 101 may include the folding housing part 341 including the folding axis 311, and the first housing part 321 and the second housing part 331 distinguished by the folding axis 311. The electronic device 101 may include the acceleration sensors 361 and 371 disposed in each of the first housing part 321 and the second housing part 331. The electronic device 101 may obtain an angle 356 between the first housing part 321, the second housing part 331, and the folding axis 311 by using the acceleration sensors 361 and 371. Based on the angle 356, the electronic device 101 may identify a state of the electronic device 101.

In an embodiment, the acceleration sensors 361 and 371 included in the electronic device 101 may be disposed on printed circuit boards (PCBs) included in each of the first housing part 321 and the second housing part 331. Among the PCBs, a PCB on which a processor (e.g., the processor 120 of FIG. 1) is disposed may be referred to as a main board. Among the PCBs, another PCB different from the PCB, which is the main board, may be referred to as a sub-board. Among the acceleration sensors 361 and 371, an acceleration sensor disposed on the main board may be referred to as a main acceleration sensor (e.g., a main six-axis acceleration sensor), and another acceleration sensor may be referred to as a sub-acceleration sensor (e.g., a sub-six axis acceleration sensor).

As described above, according to an embodiment, the electronic device 101 may include a plurality of acceleration sensors for identifying a shape and/or a posture of the deformable housing part. Acceleration measured by the acceleration sensors 360, 361, 370, and 371 disposed in the deformable housing parts 320, 321, 330, 331, 340, and 341 of the electronic device 101 according to an embodiment may be different from each other. For example, as portions in which the acceleration sensors are disposed move or rotate differently according to the shape of electronic device 101, the acceleration measured by the acceleration sensors may be different. Based on the measured acceleration in the electronic device 101, the electronic device 101 may identify the posture of the electronic device 101 based on a direction of gravitational acceleration obtained using the measured acceleration. For example, the electronic device 101 may identify a change to a folded state while executing a software application in an unfolded state. The electronic device 101 may display, on the cover display (e.g., the cover display 155 of FIG. 1), a visual object indicating execution of the software application in the folded state.

FIG. 4 illustrates an example of a flowchart indicating operations of an electronic device according to an embodiment. The electronic device of FIG. 4 may include the electronic device 101 of FIGS. 1 to 3B. At least one of the operations of FIG. 4 may be performed by the electronic device 101 of FIG. 1. At least one of the operations of FIG. 4 may be controlled by the processor 120 of FIG. 1. Each of the operations of FIG. 4 may be performed sequentially, but is not necessarily performed in sequence. For example, an order of each of the operations may be changed, and at least two operations may be performed in parallel.

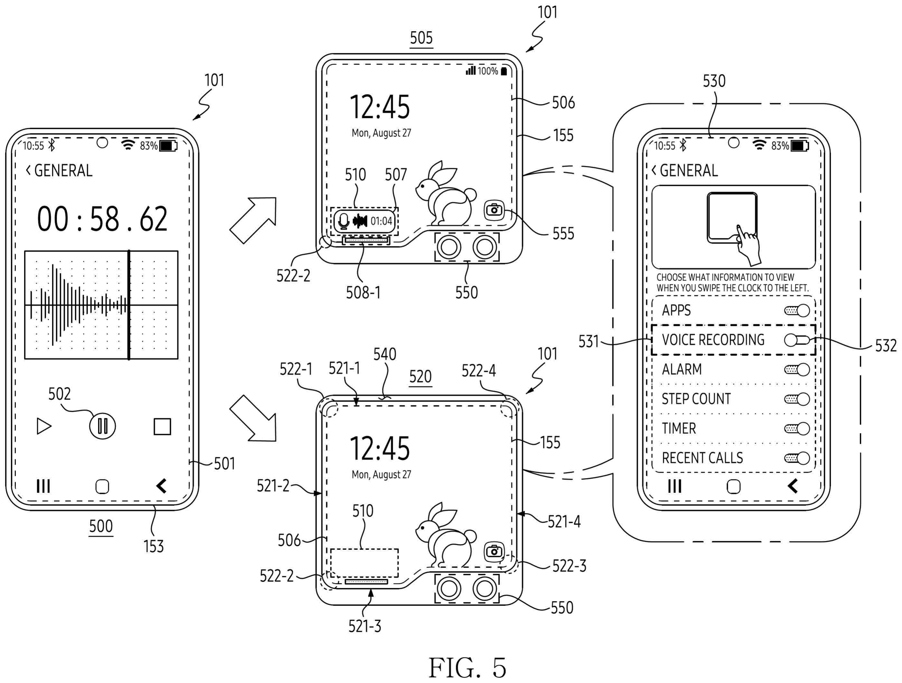

FIG. 5 illustrates an example of an operation in which an electronic device according to an embodiment displays a visual object indicating execution of a software application on a cover display based on a specified setting. An electronic device 101 of FIG. 5 may include the electronic device 101 of FIGS. 1 to 4.

Referring to FIG. 4, in operation 410, the electronic device according to an embodiment may initiate execution of a software application in an unfolded state. The software application may include the first software application 135 of FIG. 1.

Referring to FIG. 5, in state 500, the electronic device 101 according to an embodiment may display an execution screen 501 of a software application (e.g., the software application of FIG. 1) on a flexible display 153. The state 500 may be included in the state 200 of FIG. 2A. For example, the electronic device 101 may identify an input for a visual object 502 (e.g., audio recording) indicating execution of at least one function among functions of the software application. In response to the input for the visual object 502, the electronic device 101 may perform at least one function (e.g., recording). While performing the at least one function, the electronic device 101 may identify a change from an unfolded state (e.g., the state 200 of FIG. 2A) to a folded state (e.g., the state 203 of FIG. 2B). Based on identifying the change, the electronic device 101 may display a wallpaper screen 506 on a cover display 155. The wallpaper screen 506 may be provided by the widget management application 133 of FIG. 1. The wallpaper screen 506 may refer to a cover screen (or a main screen) set as a default value by the electronic device 101 for displaying at least one screen on the cover display 155. As an example, based on identifying the change, the electronic device 101 may display the wallpaper screen 506 on the cover display 155 after obtaining at least one input for the cover display 155.

Referring to FIG. 4, in operation 420, the electronic device according to an embodiment may identify whether a widget management application for managing widgets to be displayed on a cover display is linked with the software application, based on identifying a change from an unfolded state to a folded state.

Referring to FIG. 5, for example, while executing at least one function of the software application, the electronic device 101 may identify whether the software application (e.g., the first software application 135 of FIG. 1) and the widget management application (e.g., the widget management application 133 of FIG. 1) are linked, based on identifying a change from the unfolded state to the folded state. The electronic device 101 may identify whether the software application (e.g., the first software application 135 of FIG. 1) and the widget management application (e.g., the widget management application 133 of FIG. 1) are linked by using a screen 530. The screen 530 may indicate whether widgets of a plurality of software applications provided by the widget management application are executed. For example, the screen 530 may include a text object (e.g., a text object 531) indicating the plurality of software applications. The screen 530 may include a visual object 532 for setting whether widgets of the plurality of software applications are executable through the cover display. The electronic device 101 may identify whether a widget is executable through the widget management application by using the visual object 532 having a toggle form. The electronic device may identify whether the widget management application and the software application are linked by using the visual object 532.

For example, when the visual object 532 is in an activation position, the electronic device 101 may identify that the widget is executable through the widget management application. For example, when the visual object 532 is in a deactivation position, the electronic device 101 may identify that execution of the widget is at least temporarily restricted through the widget management application. However, it is not limited thereto.

Referring to FIG. 4, when the widget management application and the software application are linked (the operation 420-YES), in operation 430, the electronic device according to an embodiment may display a visual object indicating execution of the software application in an area corresponding to a corner among corners of the cover display.

Referring to FIG. 5, the electronic device 101 according to an embodiment may enter state 505 from the state 500 based on the widget (e.g., the first widget 135-1 of FIG. 1) of the software application being executable using the widget management application. For example, the electronic device 101 may display a visual object 507 indicating execution of the software application in an area 510 corresponding to a corner 522-2 among corners of the cover display 155. A shape of the visual object 507 is illustrated based on a capsule shape, but is not limited thereto. For example, the shape of the visual object 507 may have a circular shape, a polygon shape such as a triangle and a quadrangle, or a closed curve shape. The visual object 507 may be referred to as a visual element, or a user interface (UI) element, and/or a view object, a capsule UI.

A description of the area 510 corresponding to the corner 522-2 among the corners of the cover display 155 will be described below with reference to state 520.

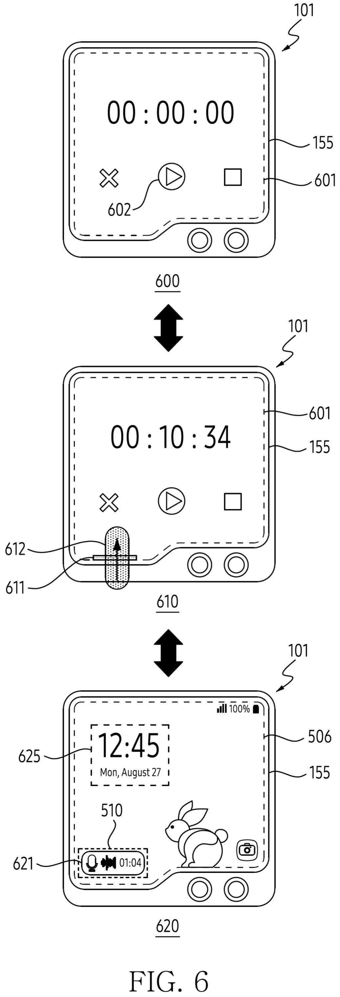

For example, the electronic device 101 may dispose a navigation area 508-1 adjacent to the area 510 of the cover display 155. The navigation area 508-1 may include an area for identifying a specified gesture. The navigation area 508-1 may be visually shown as illustrated in FIG. 5. According to an embodiment, the electronic device 101 may temporarily refrain from displaying the navigation area 508-1 by adjusting an alpha value (e.g., a parameter for adjusting transparency) of the navigation area 508-1. An operation in which the electronic device 101 identifies the specified gesture will be described below with reference to FIG. 6.

Referring to FIG. 4, when the widget management application and the software application are not linked (the operation 420-NO), in operation 440, the electronic device according to an embodiment may display a screen for linking the widget management application and the software application on the cover display. For example, the electronic device may register a widget of the software application to the widget management application by using the screen 530. However, it is not limited thereto. For example, the electronic device may register the widget of the software application to the widget management application independently of displaying the screen.

Referring to FIG. 5, the electronic device 101 according to an embodiment may enter the state 505 from the state 500 based on identifying that execution of the widget (e.g., the first widget 135-1 of FIG. 1) of the software application is at least temporarily restricted using the widget management application. For example, the electronic device 101 may temporarily refrain from displaying the visual object 507 indicating execution of the software application in the area 510. For example, based on temporarily refraining from displaying the visual object 507, the electronic device 101 may display, on the cover display 155, a screen (not illustrated) indicating whether to execute the widget of the software application corresponding to the visual object 507 through the cover display 155. The screen may include at least a portion of the screen 530. For example, when execution of the widget of the software application is temporarily refrained (or ceased) through the cover display, the electronic device 101 may display a screen for registering the widget on the cover display 155. For example, when the widget of the software application is not registered using the widget management application, the electronic device 101 may display the screen for registering the widget on the cover display 155. The electronic device 101 may display a visual object indicating execution of the software application on the cover display 155 through registration of the widget.

For example, the screen may include a list of all software applications installed in the electronic device 101. For example, the screen may include a popup screen for indicating whether to display the software application registered as a widget through the cover display 155. The electronic device may determine, through the popup screen, whether to display the software application registered as the widget on the cover display 155.

According to an embodiment, the area 510 may be formed based on a shape of the cover display 155. For example, the electronic device 101 may include the cover display 155 located on a surface 540 (e.g., the second surface 212 of FIG. 2B) of a first housing part (e.g., the first housing part 210 of FIG. 2A). At least a portion of edges of the surface may match at least a portion of edges 521-1, 521-2, 521-3, and 521-4 of the cover display 155. For example, the cover display 155 may include a first edge 521-1, a third edge 521-3 parallelly separated from the first edge 521-1, a second edge 521-2 extending from an end of the first edge 521-1 to an end of the third edge 521-3, and a fourth edge 521-4 extending from another end of the first edge 521-1 to another end of the third edge 521-3. For example, the first edge 521-1, the second edge 521-2, and/or the fourth edge 521-4 of the cover display 155 may match at least one of the edges of the surface (e.g., the second surface 212 of FIG. 2B). For example, since a camera is disposed in a partial area 550 of the surface 540 of the first housing part (e.g., the first housing part 210 of FIG. 2A), at least a portion of the third edge 521-3 of the cover display 155 may have a curved shape. For example, the third edge 521-3 of the cover display 155 may be formed based on a curved shape by the partial area 550 in which the camera is disposed. In terms of including the third edge 521-3 formed based on the curved shape, the cover display 155 may be referred to as an L-cut display. However, it is not limited thereto. The number (e.g., 2) of cameras disposed in the area 550 is not limited to what is illustrated in FIG. 5.

For example, at least a portion of corners of the surface 540 of the first housing part (e.g., the first housing part 210 of FIG. 2A) of the electronic device 101 may match at least a portion of corners 522-1, 522-2, 522-3, and 522-4 of the cover display 155. A first corner 522-1 may be formed by the first edge 521-1 and the second edge 521-2. A second corner 522-2 may be formed by the second edge 521-2 and the third edge 521-3. A third corner 522-3 may be defined by the third edge 521-3 and the fourth edge 521-4. A fourth corner 522-4 may be defined by the fourth edge 521-4 and the first edge 521-1. For example, the area 510 may refer to an area corresponding to the second corner 522-2 among the corners 522-1, 522-2, 522-3, and 522-4 of the cover display 155. The area 510 may be formed adjacent to at least a portion of the third edge 521-3 based on the curved shape. In terms of being defined adjacent to at least a portion of the third edge 521-3 based on the curved shape, the area 510 may be referred to as an L-cut area.

For example, the area 510 may include the area 550 in which the camera is disposed. The area 550 in which the camera is disposed may be defined adjacent to a portion of the third edge 521-3 different from the at least portion based on the curved shape. The area 550 may be referred to as a notch area. According to the embodiment, the camera disposed in the area 550 may be located in the cover display 155.

The electronic device 101 according to an embodiment may obtain another screen having a shape (e.g., a quadrangle) different from the shape of the cover display 155, in response to an input for obtaining the screen 506 displayed on the cover display 155. For example, the electronic device 101 may obtain the other screen including a portion occluded in the screen 506 by the third edge 521-3 based on the curved shape. The occluded portion may correspond to the area 550. In terms of the other screen including the occluded portion, the area 510 may include the area 550. As an example, in terms of the other screen having a quadrangle being obtainable, the area 510 may include at least a portion of the area 550.

The electronic device 101 may determine a location (e.g., the area 510) at which the visual object 507 is to be displayed on the cover display 155, based on the shape of the cover display 155 formed by disposing the camera on the surface 540. In terms of being an area corresponding to a corner, the area 510 may be referred to as an L-cut area, a corner area, a partial area, or an edge area. For example, the screen 506 may include an icon 555 related to the camera. The electronic device 101 may display the icon 555 adjacent to the third corner 522-3 adjacent to the camera among the corners 522-1, 522-2, 522-3, and 522-4.

As described above, the electronic device 101 according to an embodiment may notify a user of an execution state of a software application executed in the unfolded state, in a form of the visual object 507 in the folded state. The electronic device 101 may identify whether the widget of the software application is executable through the cover display 155, based on identifying a change from the unfolded state to the folded state. When the widget is executable through the cover display 155, the electronic device 101 may display the visual object 507 in the area 510. When execution of the widget is restricted through the cover display 155, the electronic device 101 may display a screen for registering the widget on the cover display 155. The electronic device 101 may determine whether to display the visual object 507 indicating execution of the software application corresponding to the widget on the cover display 155 according to whether the widget is registered. The electronic device 101 may visually display continuity of execution of the software application by indicating information of the software application being executed in the unfolded state in the form of a visual object in the folded state.

FIG. 6 illustrates an example of a visual object indicating execution of a software application displayed on a cover display according to an embodiment. An electronic device 101 of FIG. 6 may include the electronic device 101 of FIGS. 1 to 5.

The electronic device 101 according to an embodiment, in state 600, may display a first widget screen 601 on a cover display 155. The first widget screen 601 may be provided from a first widget 135-1 of the first software application 135 of FIG. 1. For example, the electronic device 101 may display the first widget screen 601 on the cover display 155 by linking the first software application 135 and the widget management application 133 of FIG. 1. Linking the first software application 135 and the widget management application 133 of FIG. 1 may include enabling execution of the first widget 135-1 of the first software application 135 by using the widget management application. Hereinafter, a widget screen displayed on the cover display 155 may be provided from a widget registered (or set) to be executable through the cover display 155. The electronic device 101 may identify the registration of the widget by using the screen 530 of FIG. 5. However, it is not limited thereto.

For example, the electronic device 101 may obtain an input for a visual object 602 for initiating execution of a widget (e.g., the first widget 135-1 of FIG. 1) providing the first widget screen 601 using the first widget screen 601. Initiating execution of the widget may include initiating execution of at least one function of the widget. Initiating execution of at least one function of the widget may include initiating execution of at least one function of a software application of the widget. For example, the electronic device 101 may enter state 610 in response to the input.

The electronic device 101 according to an embodiment, in the state 610, may identify an input performed along a first direction 612 while executing at least one function of the widget providing the first widget screen 601. The electronic device 101 may identify the input by using a navigation area 611 formed in at least a portion of the third edge 521-3 of FIG. 5. The electronic device 101 may identify the input released after moving along the first direction 612 from a point of the navigation area 611. The input may include an input that indicates moving to a wallpaper screen 506. The input may be referred to as a swipe input. The electronic device 101 may enter state 620 in response to the input.

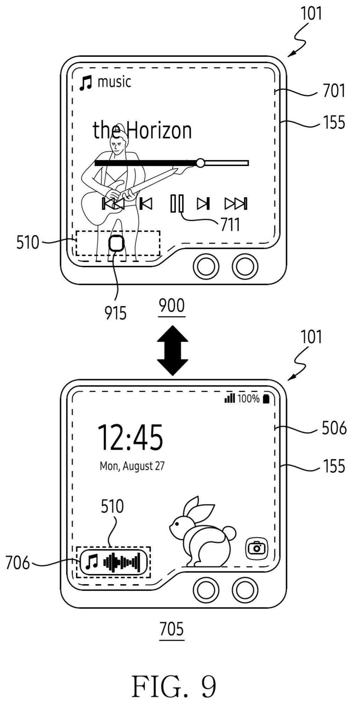

For example, the electronic device 101 may display, in an area 510, an icon (e.g., an icon 915 of FIG. 9) for moving from the first widget screen 601 to the wallpaper screen 506. The electronic device 101 may enter the state 620 in response to an input for the icon. A more detailed description of the icon will be described below with reference to FIG. 9.

The electronic device 101 according to an embodiment, in the state 620, may display the wallpaper screen 506 on the cover display 155. The electronic device 101 may display a visual object 621 indicating execution of the widget providing the first widget screen 601 in the area 510. The electronic device 101 may display the visual object 621 in the area 510 of the cover display 155, overlapping the wallpaper screen 506. For example, the electronic device 101 may display the visual object 621 together with a visual object 625 indicating time (e.g., current time) provided from the widget management application 133 of FIG. 1.

As described above, the electronic device 101 according to an embodiment may display, on the cover display 155, the visual object 621 indicating that at least one widget is being executed in a background state while displaying the wallpaper screen 506. The electronic device 101 may guide a user with information on the widget (or a software application corresponding to the widget) being executed in the background state by using the visual object 621.

Hereinafter, an example of an operation in which the electronic device 101 according to an embodiment displays at least one of visual objects indicating execution of a plurality of software applications will be described below with reference to FIGS. 7A to 7C.

FIGS. 7A to 7C illustrate an example of an operation in which an electronic device according to an embodiment displays at least one of visual objects corresponding to a plurality of software applications. An electronic device 101 of FIGS. 7A to 7C may include the electronic device 101 of FIGS. 1 to 6. State 620 may be referred to the state 620 of FIG. 6.

Referring to FIG. 7A, in the state 620, the electronic device 101 according to an embodiment may display, in an area 510, a visual object 621 indicating a first widget (e.g., the first widget 135-1 of FIG. 1) executed using a first widget screen (e.g., the first widget screen 601 of FIG. 6). For example, the electronic device 101 may identify a swipe input performed along a second direction 630. The electronic device 101 may display a second widget screen 701 based on identifying the swipe input. The second widget screen 701 may be provided from a software application (e.g., the second software application 137 of FIG. 1) different from a software application (e.g., the first software application 135 of FIG. 1) providing the first widget screen 601 of FIG. 6.

For example, based on displaying the second widget screen 701 on a cover display 155, the electronic device 101 may at least temporarily refrain from displaying the visual object 621 indicating execution of the first widget (e.g., the first widget 135-1 of FIG. 1) corresponding to the first widget screen 601 of FIG. 6. For example, since the second widget screen 701 is provided by another software application (e.g., the software application 135 of FIG. 1) distinguished from the software application (e.g., the software application 135 of FIG. 1) corresponding to the first widget, the electronic device 101 may at least temporarily refrain from displaying the visual object 621 while displaying the second widget screen 701. However, it is not limited thereto.

For example, the electronic device 101 may identify an input for a visual object 702 for executing at least one function of a second widget (e.g., the second widget 137-1 of FIG. 1) providing the second widget screen 701 by using the second widget screen 701. As an example, the electronic device 101 may play music in response to the input.

For example, the electronic device 101 may identify a swipe input performed along a first direction 612 from at least a point of a navigation area 611 while executing the at least one function. The swipe input may include an input for moving to a home screen (e.g., a wallpaper screen 506). The electronic device 101 may enter state 705 in response to the swipe input.

In the state 705 according to an embodiment, the electronic device 101 may display a visual object 706 overlapping at least a portion of the wallpaper screen 506 in response to the swipe input. For example, the electronic device 101 may display, in the area 510, the visual object 706 indicating execution of the second widget (e.g., the second widget 137-1 of FIG. 1) corresponding to the second widget screen 701.

For example, the electronic device 101 may temporarily cease displaying the visual object 621 displayed in the state 620 and display the visual object 706. For example, the electronic device 101 may display the visual object 706 together with a visual object (e.g., the visual object 625 of FIG. 6) indicating time included in the wallpaper screen 506. The electronic device 101 may temporarily cease displaying the visual object 621 and display the visual object 706 based on a specified condition.

For example, the specified condition may be based on executing the second software application (e.g., the second software application 137 of FIG. 1) providing the second widget screen 701 after executing the first software application (e.g., the first software application 135 of FIG. 1) that provides the first widget screen 601 of FIG. 6, and the visual object 706 may be displayed. The electronic device 101 may display the visual object 706 corresponding to the last executed software application on the cover display 155, based on an execution order.

For example, the electronic device 101 may display the visual object 706 overlapping at least a portion of the visual object 621. At least a portion of the visual object 621 may be occluded by the visual object 706. However, it is not limited thereto.

For example, while displaying the visual object 706, the electronic device 101 may maintain execution of the second widget (e.g., the second widget 137-1 of FIG. 1) corresponding to the visual object 706 and the first widget (e.g., the first widget 135-1 of FIG. 1) corresponding to the visual object 621 in a background state. For example, while displaying the visual object 706 overlapping the visual object 621, the electronic device 101 may maintain execution of the function of the second widget corresponding to the visual object 706 and execution of the function of the first widget corresponding to the visual object 621. However, it is not limited thereto. For example, the electronic device 101 may at least temporarily cease execution of the first widget corresponding to the visual object 621, by displaying the visual object 706 overlapping the visual object 621.

For example, the background state may include a state in which an execution screen of a software application is not displayed through a display. In the background state, an operation of maintaining execution of the first widget by the electronic device 101 may include an operation of processing a resource or a task required for execution of the first widget.

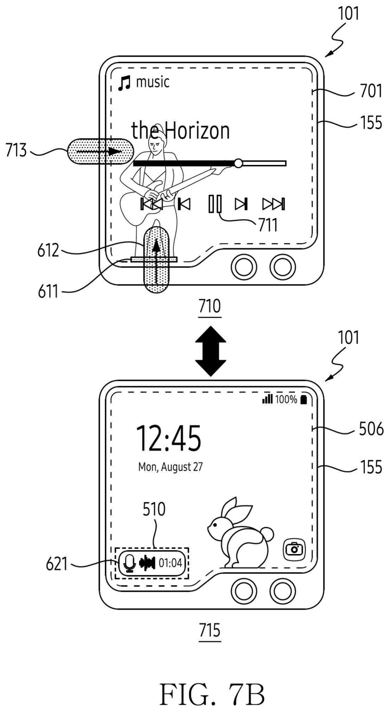

Referring to FIG. 7B, in state 710, the electronic device 101 according to an embodiment may display the second widget screen 701. For example, in the state 705 of FIG. 7A, the electronic device 101 may display the second widget screen 701 on the cover display 155 in response to a swipe input having the second direction 630. For example, the electronic device 101 may enter the state 710 in response to an input for the visual object 706 of FIG. 7A.

For example, the electronic device 101 may identify an input for temporarily ceasing execution of the software application (e.g., the second software application 137 of FIG. 1) providing the second widget screen by using the second widget screen 701. The electronic device 101 may identify an input for a visual object 711 indicating temporarily ceasing the execution. The electronic device 101 may identify an input for the visual object 711 indicating at least temporarily ceasing execution of a function (e.g., music playback) provided using the software application. The electronic device 101 may at least temporarily cease execution of the function in response to the input. For example, after identifying the input, the electronic device 101 may identify a specified gesture having the first direction 612 using the navigation area 611. The specified gesture may include a swipe input having the first direction 612. For example, the electronic device 101 may enter state 715 in response to identifying the specified gesture. However, it is not limited thereto. The electronic device 101 according to an embodiment may identify a swipe input having a third direction 713 in the state 710. The electronic device 101 may enter the state 715 in response to the swipe input.

In the state 715, the electronic device 101 according to an embodiment may temporarily cease display of the visual object 706 and display the visual object 621 in the area 510. For example, since display of the visual object 706 that occludes at least a portion of the visual object 621 has been temporarily ceased, the visual object 621 may be displayed in the area 510. The electronic device 101 may indicate that execution of the widget (e.g., the first widget 135-1 of FIG. 1) corresponding to the visual object 621 is maintained, based on displaying the visual object 621.

For example, the electronic device 101 may display the visual object 621 on at least a portion of the visual object 706. When execution of the second widget corresponding to the visual object 706 is temporarily ceased for a specified time, the electronic device 101 may refrain from displaying the visual object 706 independently of the visual object 621 after the specified time. However, it is not limited thereto.

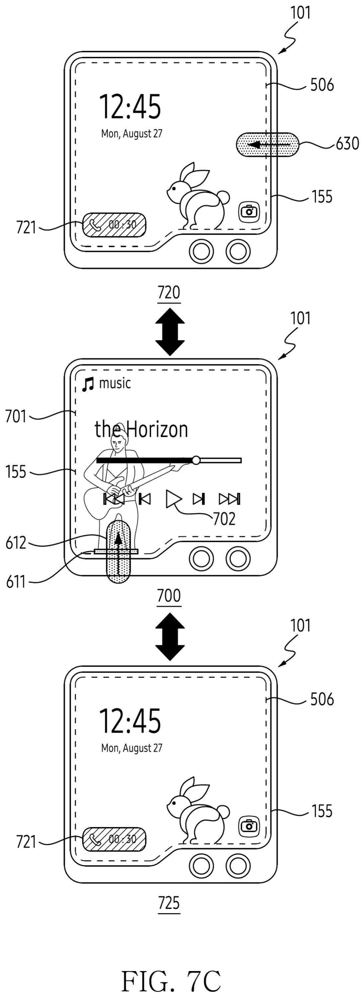

Referring to FIG. 7C, the electronic device 101 according to an embodiment may display, on the cover display 155, a visual object 721 indicating execution of a software application related to a call, overlapping the wallpaper screen 506. While displaying the visual object 721, the electronic device 101 may identify a swipe input along the second direction 630. The electronic device 101 may enter the state 700 in response to the swipe input. The visual object 721 may include a visual object indicating an outgoing call or an incoming call.

For example, in the state 700, the electronic device 101 may temporarily cease displaying the visual object 721 and display the second widget screen 701. However, it is not limited thereto. The electronic device 101 may display the second widget screen 701 together with the display of the visual object 721.

For example, in response to an input for the visual object 702, the electronic device 101 may initiate execution of the second widget (e.g., the second widget 137-1 of FIG. 1) corresponding to the second widget screen 701. For example, in response to the input for the visual object 702, the electronic device 101 may initiate execution of the function of the second widget corresponding to the second widget screen 701.

For example, while executing the function of the second widget, the electronic device 101 may identify a specified gesture (or a swipe input) along the first direction 612 using the navigation area 611. The electronic device 101 may display the wallpaper screen 506 based on identifying the specified gesture. The electronic device 101 may enter state 725 in response to identifying the specified gesture.

For example, in the state 725, the electronic device 101 may maintain display of the visual object 721. The electronic device 101 may identify an execution order of software applications executed by a processor by executing a software application (e.g., the second software application 137 of FIG. 1) corresponding to the second widget screen 701, after execution of the software application related to a call. The electronic device 101 may maintain display of the visual object 721 independently of the execution order. For example, an operation of displaying the visual object 721 indicating execution of the software application related to a call may be set to be prioritized over an operation of displaying at least one visual object based on the execution order. The electronic device 101 may maintain display of the visual object 721, based on the priority between the operation of displaying the visual object 721 indicating execution of the software application related to a call and the operation of displaying at least one visual object based on the execution order.

For example, the electronic device 101 may dispose a layer corresponding to the visual object 706 between a layer corresponding to the visual object 721 and a layer corresponding to the wallpaper screen 506. The electronic device 101 may display the visual object 721 overlapping at least a portion of the visual object 706 by disposing the layer corresponding to the visual object 706. For example, when at least one function (e.g., outgoing call) of the software application related to a call is terminated, the electronic device 101 may refrain from displaying the visual object 721 and may display the visual object 706.

As described above, when widgets of a plurality of software applications are executed, the electronic device 101 according to an embodiment may determine an order of visual objects to be displayed in the area 510 according to an order in which the widgets were executed. The electronic device 101 may prioritize a second condition for displaying the visual object 721 indicating execution of at least one software application (e.g., the software application related to a call) among the plurality of software applications over a first condition for displaying at least one visual object, based on the order. The electronic device 101 may guide information on the software application being executed in the background state, based on displaying at least one visual object in the area 510.

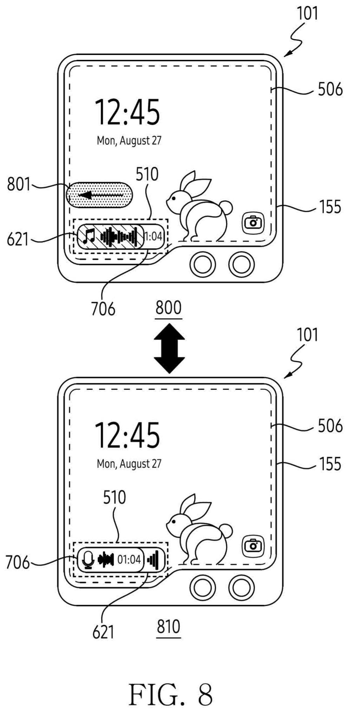

FIG. 8 illustrates an example of an operation in which an electronic device according to an embodiment temporarily ceases execution of a widget in response to a specified input for a visual object. An electronic device 101 of FIG. 8 may include the electronic device 101 of FIGS. 1 to 7C. State 800 may be included in the state 705 of FIG. 7A.

Referring to FIG. 8, in the state 800, the electronic device 101 according to an embodiment may display a visual object 706 in an area 510, overlapping at least a portion of a visual object 621.

For example, while displaying the visual object 706 overlapping on the visual object 621, the electronic device 101 may identify an input for the visual object 706. The input may include an input for terminating execution (or a function) of a second widget (e.g., the second widget 137-1 of FIG. 1) corresponding to the visual object 706. The electronic device 101 may identify a swipe input based on a second direction 801. For example, the electronic device 101 may change a shape of the visual object 706 according to the swipe input. The electronic device 101 may change a location of the visual object 706 in the area 510 according to the swipe input.

For example, the electronic device 101 may reduce a size of the visual object 706 according to a swipe input having the second direction 801. For example, based on reducing the size of the visual object 706 according to the swipe input having the second direction 801 by the electronic device 101, the visual object 621 overlapping at least a portion of the visual object 706 may be displayed in the area 510. The electronic device 101 may terminate execution of the second widget (e.g., the second widget 137-1 of FIG. 1) corresponding to the visual object 706 being executed in a background state, based on identifying the visual object 706 having a size smaller than a specified size.

For example, the electronic device 101 may change the location of the visual object 706 according to a swipe input having the second direction 801. The electronic device 101 may move the visual object 706 based on the swipe input. Based on the visual object 706 moving to a specified location, the electronic device 101 may terminate execution of the second widget (e.g., the second widget 137-1 of FIG. 1) corresponding to the visual object 706 being executed in the background state.

For example, based on terminating execution of the second widget corresponding to the visual object 706, the electronic device 101 may temporarily refrain from displaying the visual object 706. Based on temporarily refraining from displaying the visual object 706, the electronic device 101 may display the visual object 621 in the area 510, in state 810. In the state 810 according to an embodiment, the electronic device 101 may maintain execution of a widget (e.g., the first widget 135-1 of FIG. 1) corresponding to the visual object 621 in the background state.

Although not illustrated, in the state 800, the electronic device 101 according to an embodiment may change an order of the visual objects 621 and 706. In response to the swipe input, the electronic device 101 may change the order of the visual objects 621 and 706 while maintaining execution of the widgets (e.g., the first widget 135-1 of FIG. 1 and the second widget 137-1 of FIG. 1) corresponding to each of the visual objects 621 and 706.

For example, while displaying the visual object 706 overlapping on the visual object 621, the electronic device 101 may identify a swipe input following the second direction 801. In response to the swipe input, the electronic device 101 may temporarily refrain from displaying the visual object 706 and may display the visual object 621 in the area 510. In response to the swipe input, the electronic device 101 may display the visual object 621 in the area 510, overlapping at least a portion of the visual object 706. However, it is not limited to the above-described embodiment.

As described above, while displaying the visual objects 621 and 706 indicating execution of a plurality of software applications in the area 510 of a cover display 155, the electronic device 101 according to an embodiment may control execution of the software applications by using the visual objects. The electronic device 101 may control execution of the software applications by using the visual objects 621 and 706 displayed together with a wallpaper screen 506, without displaying a widget screen (e.g., a first widget screen 601 or a second widget screen 701) provided by the software applications on the cover display 155.

FIG. 9 illustrates an example of a visual object displayed on a cover display according to an embodiment. An electronic device 101 of FIG. 9 may include the electronic device 101 of FIG. 1 to FIG. 8. State 900 may be included in the state 700 of FIG. 7A.

Referring to FIG. 9, in the state 900, the electronic device 101 according to an embodiment may display a second widget screen 701 on a cover display 155. While displaying the second widget screen 701, the electronic device 101 may display an icon 915 for moving to a wallpaper screen 506. The icon 915 may visually indicate a navigation area 611. The icon 915 may be referred to as a visual object, a home button, a navigation button, a back button, a home icon, or a navigation icon for moving to the wallpaper screen 506.

For example, in the state 620 of FIG. 7A, while displaying a visual object 621 in an area 510 together with the wallpaper screen 506, the electronic device 101 may enter the state 900 in response to a swipe input following a second direction 630. The electronic device 101 may temporarily cease display of the visual object 621 and may display the icon 915 in the area 510. However, it is not limited thereto. The electronic device 101 may enter state 705 in response to an input for the icon 915. The state 705 may be referred to the state 705 of FIG. 7A.

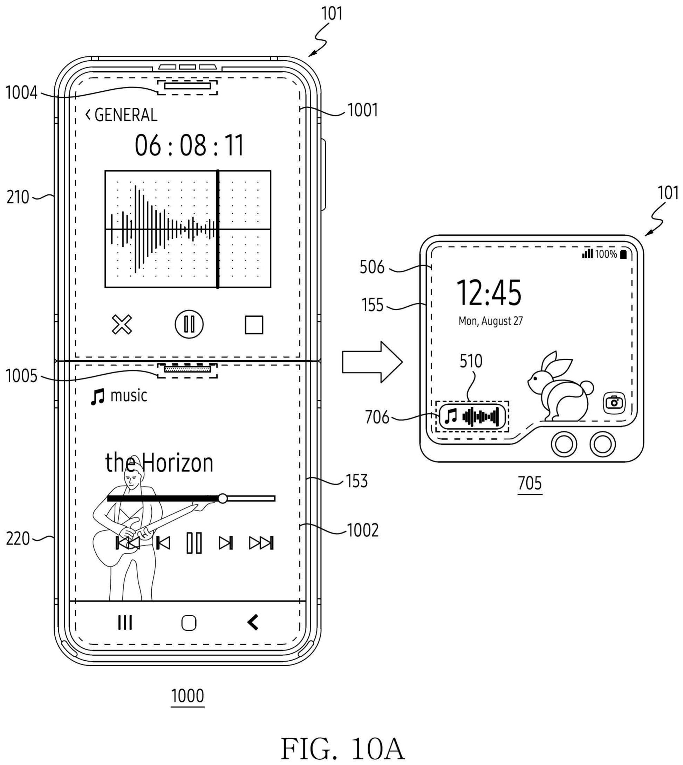

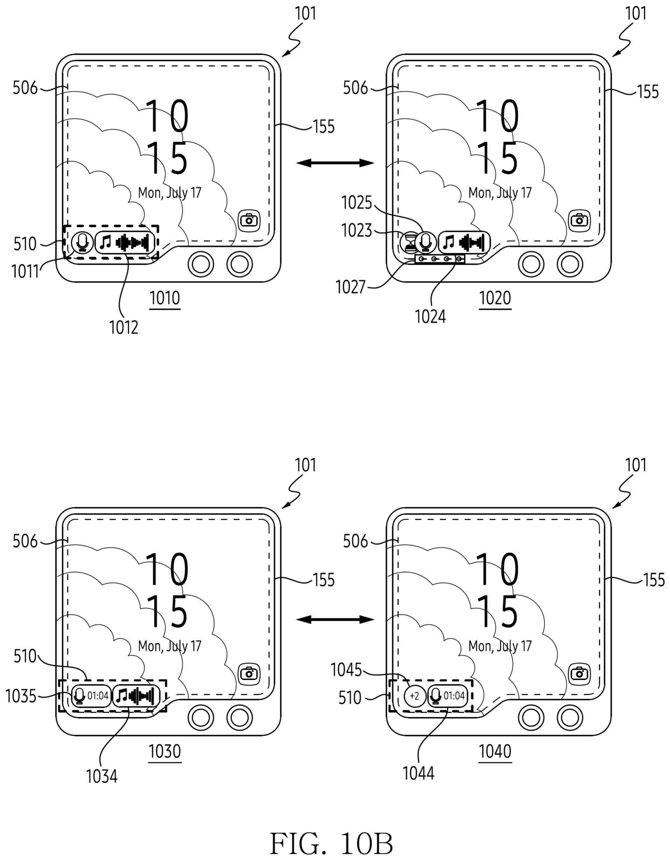

FIGS. 10A and 10B illustrate an example of an operation for displaying at least one of visual objects corresponding to a plurality of software applications according to an embodiment. An electronic device 101 of FIGS. 10A and 10B may include the electronic device 101 of FIGS. 1 to 9. State 1000 may be included in the state 200 of FIG. 2A.

Referring to FIG. 10A, in the state 1000, the electronic device 101 according to an embodiment may display a plurality of screens 1001 and 1002 on a flexible display 153. The plurality of screens 1001 and 1002 may each be provided by different software applications. The plurality of screens 1001 and 1002 displayed on the flexible display 153 by the electronic device 101 may be referred to as a multi-window screen.

For example, the electronic device 101 may display a first screen 1001 of a first software application (e.g., the first software application 135 of FIG. 1) on a portion of the flexible display 153 located on a surface of a first housing part 210. The electronic device 101 may display a second screen 1002 of a second software application (e.g., the second software application 137 of FIG. 1) on another portion of the flexible display 153 disposed on a surface of a second housing part 220. The first software application and the second software application may include an application set to link with the widget management application 133 of FIG. 1. A first widget (e.g., the first widget 135-1 of FIG. 1) of the first software application and a second widget (e.g., the second widget 137-1 of FIG. 1) of the second software application may include a widget registered in the widget management application.

For example, while displaying the first screen 1001 and the second screen 1002 on the flexible display 153, the electronic device 101 may indicate an order of the first screen 1001 and the second screen 1002. To indicate the order, the electronic device 101 may display an indicator 1004 corresponding to the first screen 1001 and an indicator 1005 corresponding to the second screen 1002.

For example, the electronic device 101 may indicate an execution order of the first software application corresponding to the first screen 1001 and the second software application corresponding to the second screen 1002 by using the indicators 1004 and 1005. For example, the indicator 1005 may indicate execution of the second software application corresponding to the second screen 1002 in a foreground state. The indicator 1004 may indicate execution of the first software application corresponding to the first screen 1001 in a background state. The electronic device 101 may identify the execution order of the first software application and the second software application based on indicating that the first software application is executed in the background state and the second software application is executed in the foreground state by using the indicators 1004 and 1005. For example, the electronic device 101 may identify that the second software application is executed after the first software application is executed. Based on the execution order, the electronic device 101 may identify the second software application that was last executed in the foreground before executing the first software application and the second software application in the background state. For example, the state 1000 may include a state in which the second screen 1002 is focused.

In the state 1000, the electronic device 101 according to an embodiment may identify an angle between the first housing part 210 and the second housing part 220 by using a sensor (e.g., the sensor 160 of FIG. 1). The electronic device 101 may identify the angle between the first housing part 210 and the second housing part 220 having a specified angle corresponding to a folded state. The electronic device 101 may change from the state 1000 to state 705 based on identifying the folded state. In the state 705, the electronic device 101 according to an embodiment may display a visual object 510 indicating the second software application executed in the foreground state, in an area 510. The state 705 may be referred to the state 705 of FIG. 7A.

Referring to FIG. 10B, the electronic device 101 according to an embodiment may enter at least one of states 1010, 1020, 1030, or 1040 based on identifying the folded state after the plurality of software applications are executed.

In the state 1010, the electronic device 101 according to an embodiment may display a wallpaper screen 506 on the cover display 155. For example, the electronic device 101 may enter the state 1010 from a state (e.g., the state 1000 of FIG. 10A) in which the plurality of software applications are executed based on multi-window. The electronic device 101 may display visual objects 1011 and 1012 indicating execution of the first software application and/or the second software application in the area 510 while displaying the wallpaper screen 506. For example, the electronic device 101 may display the visual objects 1011 and 1012 by using execution state information that updates an operation of the first software application and the second software application in real time or periodically. The electronic device 101 may arrange the visual objects 1011 and 1012 based on the execution order of the software applications executed by a processor.

For example, the electronic device 101 may display a size of the visual object 1012 indicating execution of the second software application corresponding to the second screen 1002 of FIG. 10A focused in the state 1000 larger than a size of the visual object 1011 indicating execution of the first software application.

The electronic device 101 according to an embodiment may enter state 1020 after executing a plurality of software applications. In the state 1020, the electronic device 101 according to an embodiment may display visual objects 1023, 1024, and 1025 corresponding to each of the plurality of software applications in the area 510. For example, the electronic device 101 may arrange the visual objects 1023, 1024, and 1025 in the area 510 based on a specified order. For example, the electronic device 101 may dispose the visual object 1024 corresponding to the first software application executed in the foreground state among the plurality of software applications before entering the state 1020 at the top among the visual objects 1024, 1025, and 1023. For example, the electronic device 101 may identify a size of each of the visual objects 1023, 1024, and 1025. The electronic device 101 may set the size of the visual object 1024 disposed at the top larger than the sizes of the other visual objects 1023 and1025.

For example, before entering the state 1020, the electronic device 101 may execute a third software application corresponding to the visual object 1023 and may execute the second software application corresponding to the visual object 1025. After executing the second software application, the electronic device 101 may execute the first software application corresponding to the visual object 1024. The electronic device 101 may identify the execution order of the third software application, the second software application, and the first software application. Based on the execution order, the electronic device 101 may display the visual object 1025 overlapping at least a portion of the visual object 1023 in the area 510. Based on the execution order, the electronic device 101 may display the visual object 1024 overlapping at least a portion of the visual object 1025.

The electronic device 101 according to an embodiment may arrange the visual objects 1023, 1024, and 1025 in an area based on the execution order. For example, the electronic device 101 may display indicators 1027 indicating the order of the visual objects 1023, 1024, and 1025 together. For example, the electronic device 101 may change the order of the visual objects 1023, 1024, and 1025 based on a swipe input for the visual objects 1023, 1024, and 1025. The number of the indicators 1027 may change based on the number of the visual objects 1023, 1024, and 1025. The electronic device 101 may change the size of each of the visual objects 1023, 1024, and 1025, in response to the swipe input. As an example, in response to the swipe input, the electronic device 101 may display the size of at least one visual object disposed at the top among the visual objects 1024, 1024, 1025 larger than the other visual objects. As an example, the swipe input may include a swipe input having the third direction 713 of FIG. 7B, or the second direction 630 of FIG. 7C.

In state 1030, the electronic device 101 according to an embodiment may display visual objects 1035 and 1034 having the same size in the area 510. The size of each of the visual objects 1035 and 1034 may be smaller than the size of the visual object 507 of FIG. 5. As an example, the electronic device 101 may display, in the area 510, the visual object 1034 corresponding to the software application that was last executed among the visual objects 1035 and 1034 adjacent to a camera.

The state 1040 according to an embodiment may include the electronic device 101 that has executed a plurality of software applications. For example, in the state 1040, the electronic device 101 may display a visual object 1044 corresponding to the first software application that was last executed among the plurality of software applications. The electronic device 101 may display other software applications different from the first software application among the plurality of software applications, by using a visual object 1045. The visual object 1045 may indicate the number of the other software applications. A size of the visual object 1045 may be smaller than a size of the visual object 1044. The electronic device 101 may enter the state 1020 in response to an input for the visual object 1045. However, it is not limited thereto. For example, the electronic device 101 may identify a priority for each of the plurality of software applications. Based on identifying the priority, the electronic device 101 may display, on the display, a visual object for the first software application, which has a relatively higher priority among the first software application and a second software application. The priority may be changed by a user input.

As described above, the electronic device 101 according to an embodiment may execute the plurality of software applications in an unfolded state based on a multi-window function. The electronic device 101 may display the plurality of screens 1001 and 1002 on the flexible display 153 based on the execution of the plurality of software applications. While displaying the plurality of screens 1001 and 1002 on the flexible display 153, the electronic device 101 may identify a change from the unfolded state to the folded state. In the folded state, the electronic device 101 may display at least one visual object (e.g., a visual object 706) among the visual objects indicating the plurality of software applications on the cover display 155, according to the execution order of the plurality of software applications.

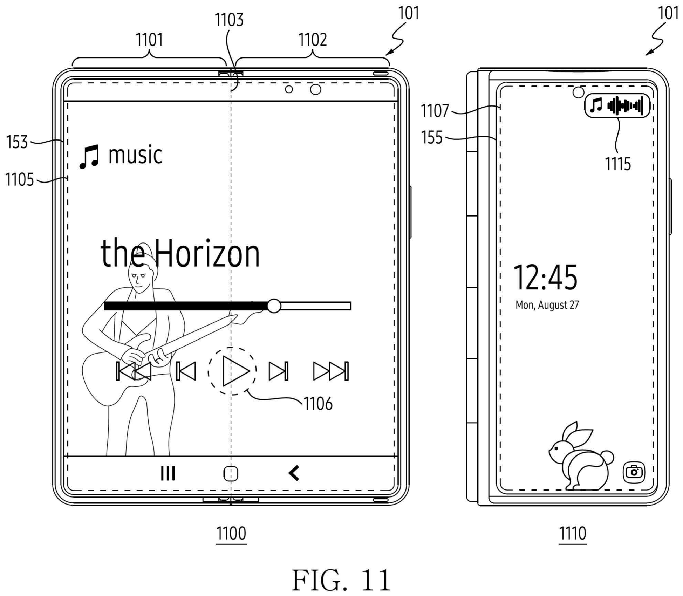

FIG. 11 illustrates an example of an operation in which an electronic device according to an embodiment displays a visual object indicating execution of a software application on a cover display. Referring to FIG. 11, an electronic device 101 according to an embodiment may be included in the electronic device 101 of FIG. 1. For example, a flexible display 153 may be referred to the flexible display 153 of FIG. 1. A cover display 155 may be referred to the cover display 155 of FIG. 1.

Referring to FIG. 11, in state 1100, the electronic device 101 may display a screen 1105 of at least one software application (e.g., the second software application 137 of FIG. 1) on the flexible display 153. The electronic device 101 may initiate execution of a function of the at least one software application by using the screen 1105. For example, the electronic device 101 may initiate execution of the function in response to an input for a visual object 1106. While executing the function, the electronic device 101 may identify an angle between a first housing part 1101 and a second housing part 1102 based on a folding axis 1103. The first housing part 1101 may be referred to the first housing part 210 of FIG. 2A. The second housing part 1102 may be referred to the second housing part 220 of FIG. 2A. The folding axis 1103 may be referred to the folding axis 237 of FIG. 2A.

For example, the electronic device 101 may identify an angle between the first housing part 1101 and the second housing part 1102 included in a specified angle (e.g., 0 degrees) corresponding to a folding state. The electronic device 101 may enter state 1110 from the state 1100 based on identifying the angle.

In the state 1110, the electronic device 101 according to an embodiment may display a wallpaper screen 1107 on the cover display 155. In the state 1110, the electronic device 101 may maintain execution of at least one software application corresponding to the screen 1105. For example, the electronic device 101 may maintain execution of the at least one software application in a background state. The electronic device 101 may display a visual object 1115 indicating the execution in at least one area of the cover display 155. A location of the at least one area of the cover display 155 may vary according to an embodiment. The electronic device 101 may notify a user of execution of the at least one software application through the cover display 155, based on displaying the visual object 1115 in the at least one area while displaying the wallpaper screen 1107.

Although not illustrated, the electronic device 101 according to an embodiment may include a flexible display that may be inserted into or extracted from a housing of the electronic device 101. The electronic device 101 may include an actuator for inserting at least a portion of the flexible display into the housing or extracting at least a portion of the flexible display from the housing.

For example, in a state in which at least a portion of the flexible display is inserted into the housing (e.g., a slide-in state or a retracted state), a size of the flexible display may have a first size. In a state in which at least a portion of the flexible display is extracted from the housing (e.g., a slide-out state or an extended state), the size of the flexible display may have a second size. The first size may be smaller than the second size. The electronic device 101 may display a visual object indicating execution of a software application on at least a portion (e.g., a corner area) of the flexible display having the first size.

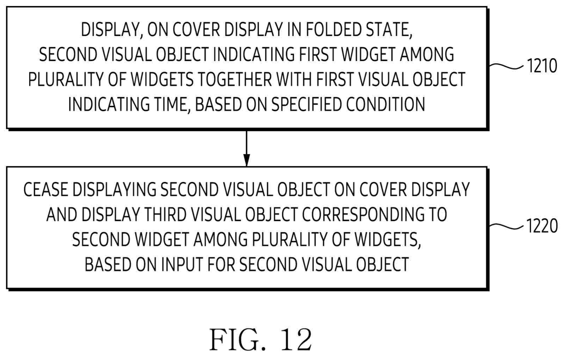

FIG. 12 illustrates an example of a flowchart indicating an operation of an electronic device according to an embodiment. The electronic device of FIG. 12 may include the electronic device 101 of FIGS. 1 to 11. At least one of the operations of FIG. 12 may be performed by the electronic device 101 of FIG. 1. At least one of the operations of FIG. 12 may be controlled by the processor 120 of FIG. 1. Each of the operations of FIG. 12 may be performed sequentially, but is not necessarily performed sequentially. For example, an order of each of the operations may be changed, and at least two operations may be performed in parallel.

Referring to FIG. 12, in operation 1210, a processor according to an embodiment may display, on a cover display in a folded state, a second visual object indicating a first widget among a plurality of widgets together with a first visual object indicating time, based on a specified condition.

For example, in the folded state (e.g., the state 800 of FIG. 8), the processor may display the second visual object (e.g., the visual object 706 of FIG. 8) indicating the first widget (e.g., the second widget 135-2 of FIG. 1) among the plurality of widgets together with the first visual object (e.g., the visual object 625 of FIG. 6). The second visual object may indicate execution of the first widget. The processor may display the second visual object indicating the first widget among the plurality of widgets on the cover display, based on an execution order of the plurality of widgets.

Referring to FIG. 12, in operation 1220, the processor according to an embodiment may cease displaying the second visual object on the cover display and may display a third visual object (e.g., the visual object 621 of FIG. 8) corresponding to a second widget (e.g., the first widget 135-1 of FIG. 1) among the plurality of widgets, based on an input for the second visual object. For example, the processor may identify a swipe input based on a specified direction (e.g., the second direction 801 of FIG. 8). Based on identifying the swipe input, the processor may refrain from displaying the second visual object. As an example, based on refraining from displaying the second visual object, execution of the first widget corresponding to the second visual object may be terminated. However, it is not limited thereto.

For example, the processor may identify a touch input for the second visual object. Based on identifying the touch input for the second visual object, the processor may display a first widget screen (e.g., the second widget screen 701 of FIG. 7A) corresponding to the second visual object on the cover display. The processor may temporarily cease execution of a function of the first widget by using the first widget screen. Based on temporarily ceasing execution of the function of the first widget, the processor may temporarily cease display of the second visual object.

For example, the processor may display the second visual object overlapping the third visual object, based on the execution order of the plurality of widgets. For example, the processor may identify execution of the first widget corresponding to the second visual object after execution of the second widget corresponding to the third visual object. The processor may display the second visual object corresponding to the first widget, which was executed relatively later than the second widget, on the third visual object. Since the second visual object is displayed overlapping the third visual object, the processor may display the third visual object on the cover display by ceasing display of the second visual object.

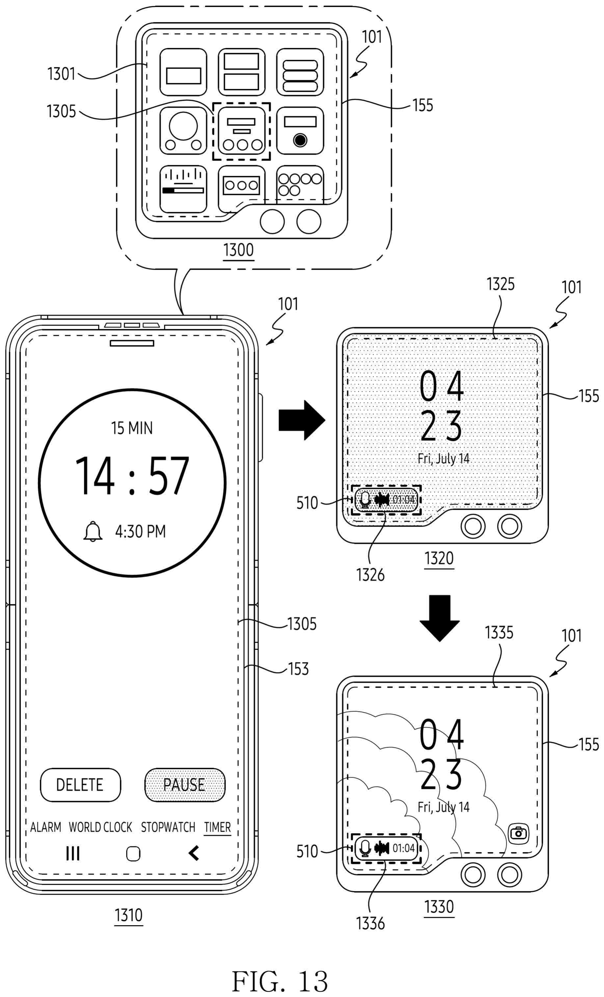

FIG. 13 illustrates an example of an operation in which an electronic device according to an embodiment displays a default screen. An electronic device 101 of FIG. 13 may include the electronic device 101 of FIGS. 1 to 12.

Referring to FIG. 13, in state 1300, the electronic device 101 according to an embodiment may display a screen 1301 including a plurality of widgets executable through a cover display 155. In response to an input for at least one widget 1305 among the plurality of widgets included in the screen 1301, the electronic device 101 may execute a software application (e.g., a timer software application) corresponding to the at least one widget 1305. The screen 1301 may be referred to as a map view screen for guiding the plurality of widgets.

Referring to FIG. 13, in state 1310, the electronic device 101 according to an embodiment may display a screen 1305 on a flexible display 153 based on an unfolding state. The electronic device 101 may indicate that an operation of a software application operating in the background is updated in real time or periodically by using the screen 1305 provided by the software application. The electronic device 101 may identify a change from the unfolding state to a folding state. For example, based on identifying the change, the electronic device 101 may deactivate the cover display 155 in the folding state. However, it is not limited thereto. For example, based on identifying the change, the electronic device may display at least one screen on the cover display 155. For example, the at least one screen may be referred to as a default screen. The default screen may include an always on display (AOD) screen or a wallpaper screen (or a main screen) according to an embodiment.

In state 1320, the electronic device 101 according to an embodiment may display an AOD screen 1325 on the cover display 155. The AOD screen 1325 may include a visual object indicating time. Together with the AOD screen 1325, the electronic device 101 may display a visual object 1326 indicating execution of the software application executed in the state 1310, in an area 510. The electronic device 101 may display a dim visual object 1326 together with the AOD screen 1325, based on an alpha value indicating transparency. However, it is not limited thereto. For example, the electronic device 101 may enter state 1330 based on an input (e.g, a touch input) for the cover display 155. For example, when the electronic device 101 performs an operation in which the cover display 155 is turned on by a user input or a system input, it may display a default screen (or a wallpaper screen) in a first area of the cover display 155. The first area may include a display area of the cover display 155.

In the state 1330, the electronic device 101 according to an embodiment may display a wallpaper screen 1335 on the cover display 155. The electronic device 101 may display a visual object 1336 indicating the software application executed in the state 1310. As an example, brightness corresponding to the visual object 1336 may be brighter than brightness corresponding to the visual object 1326.

According to an embodiment, the electronic device 101 may display a screen different from the wallpaper screen 1335 based on identifying a specified gesture in the state 1330. For example, the electronic device 101 may display the screen 1301 based on identifying a pinch-zoom gesture. For example, the electronic device 101 may display a screen of at least one widget among the widgets executable through the cover display 155, in response to a swipe input (e.g., a swipe input having the second direction 630 of FIG. 7C). For example, the electronic device 101 may display the wallpaper screen 1335, or a user interface for editing the executable widgets, in response to an input maintaining contact for a specified time (e.g., a long-press input).

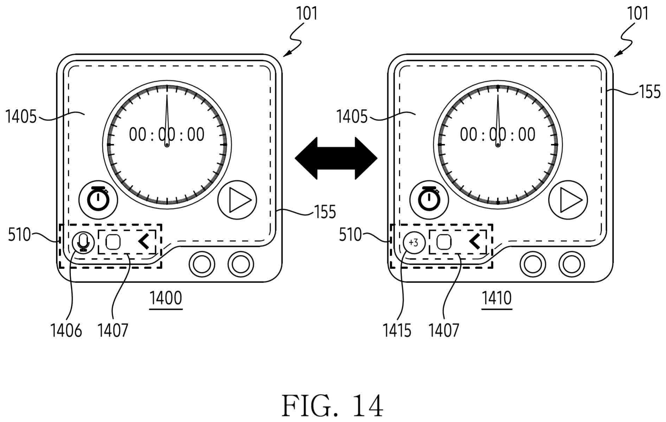

FIG. 14 illustrates an example of an operation in which an electronic device according to an embodiment displays a widget screen. An electronic device 101 of FIG. 14 may include the electronic device 101 of FIGS. 1 to 13.

Referring to FIG. 14, in state 1400, the electronic device 101 according to an embodiment may display a widget screen 1405 on a cover display 155. The widget screen 1405 may be provided from a first widget among a plurality of widgets executable through the cover display. For example, the electronic device 101 may display visual objects 1406 and 1407 overlapping at least a portion of the widget screen 1405. For example, the electronic device 101 may display the visual objects 1406 and 1407 in an area 510.

For example, the visual objects 1407 may include the icon 915 of FIG. 9. The visual objects 1407 may include a home button and a back button. The home button may refer to a visual object for moving to a default screen (or a wallpaper screen). The back button may refer to a visual object for moving from a first screen to a second screen among a plurality of screens provided from the first widget, when at least a portion of the plurality of screens are displayed in an overlapping manner. However, it is not limited thereto. In other words, the back button may be used to switch from a first function to a second function among functions provided from one widget while executing the widget. The second function may be a function performed relatively earlier than the first function.

For example, the visual object 1406 may indicate execution of a second widget different from the first widget providing the widget screen 1405. For example, the electronic device 101 may display, overlapping the widget screen 1405, the visual object 1406 indicating execution state information for updating an operation of the second widget in real time or periodically. For example, when the second widget includes a plurality of widgets, the electronic device 101 may display a visual object 1415, such as in state 1410. The visual object 1415 may indicate the number of the plurality of widgets.

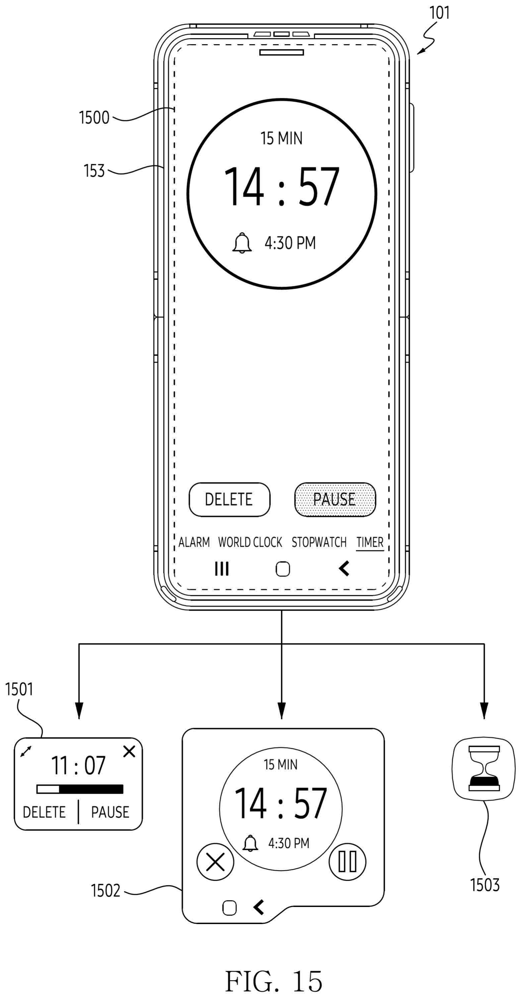

FIG. 15 illustrates an example of a widget screen provided from a software application according to an embodiment. An electronic device 101 of FIG. 15 may include the electronic device 101 of FIGS. 1 to 14.

Referring to FIG. 15, an electronic device 101 according to an embodiment may display a screen 1500 on a flexible display 153 based on execution of at least one software application. The at least one software application may include a third-party application (or an on-going application) provided (or installed) from an external server. A package of the at least one software application may include a plurality of visual objects (or a plurality of user interfaces). For example, the plurality of visual objects may include an icon 1503 for visually indicating the at least one software application. For example, when displaying a widget of the at least one software application on the flexible display 153, the electronic device 101 may display a visual object 1501. For example, when displaying a widget of the at least one software application on a cover display 155, the electronic device 101 may display a visual object 1502.

The electronic device 101 according to an embodiment as described above may display the plurality of visual objects indicating not only software applications provided from an operating system but also a software application provided from an external server, through the flexible display or the cover display, using the package of the at least one software.

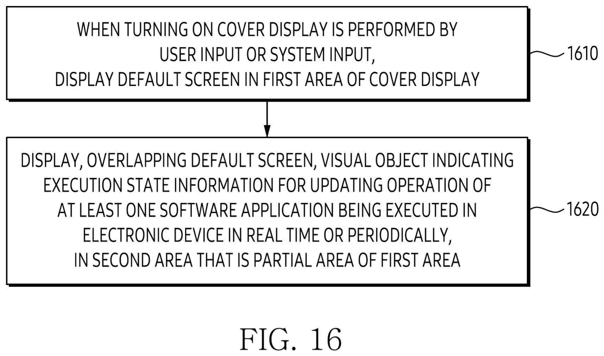

FIG. 16 illustrates an example of a flowchart indicating an operation of an electronic device according to an embodiment. The electronic device of FIG. 16 may include the electronic device 101 of FIGS. 1 to 15. At least one of the operations of FIG. 16 may be performed by the electronic device 101 of FIG. 1. At least one of the operations of FIG. 16 may be controlled by the processor 120 of FIG. 1. Each of the operations of FIG. 16 may be performed sequentially, but may not necessarily be performed sequentially. For example, an order of each of the operations may be changed, and at least two operations may be performed in parallel.

Referring to FIG. 16, in operation 1610, when a processor according to an embodiment performs an operation in which a cover display is turned on by a user input or a system input, it may display a default screen in a first area of the cover display. For example, the electronic device may include a housing including a first housing part (e.g., the first housing part 210 of FIG. 2A) and a second housing part (e.g., the second housing part 220 of FIG. 2A) rotatably coupled to the first housing part. The electronic device may include a flexible display (e.g., the flexible display 153 of FIG. 1) extending from a surface (e.g., the first surface 211 of FIG. 2A) of the first housing part to a surface (e.g., the first surface 221 of FIG. 2A) of the second housing part. The electronic device may include a cover display (e.g., the cover display 155 of FIG. 1) located on another surface (e.g., the second surface 212 of FIG. 2B) of the first housing part. The electronic device may include one or more cameras. For example, a first camera among the one or more cameras may be disposed on the same lateral surface as the cover display. A second camera among the one or more cameras may be disposed on the same lateral surface as the flexible display.

For example, since a camera is disposed in a notch area (e.g., the partial area 550 of FIG. 5) of another surface of the first housing part (e.g., the first housing part 210 of FIG. 2A), at least a portion of an edge (e.g., the third edge 521-3 of FIG. 5) of the cover display may have a curved shape. The cover display defined along the third edge may be referred to as an L-cut display. For example, a screen displayed through the cover display may be at least partially occluded by the camera disposed in the notch area. When the processor displays a screen having a quadrilateral shape through the cover display, the screen, of which at least a portion corresponding to the notch area is occluded, may be visible to a user of the electronic device. However, it is not limited thereto. As an example, when the camera includes an under display camera (UDC) located in the cover display, at least a portion of an edge of the cover display may have a linear shape distinguished from the curved shape. When the camera includes a UDC located in the cover display, the processor may provide a screen having a quadrilateral shape to the user.

For example, the first area of the cover display may include a display area of the cover display. For example, the default screen may include an always on display (AOD) screen and/or a wallpaper screen (or a main screen). For example, the default screen may include a visual object (e.g., the visual object 625 of FIG. 6) indicating current time provided from an external server. The processor may display the default screen including the visual object based on numbers. The processor may display the default screen including the visual object having a clock shape. However, it is not limited thereto.

For example, in a folded state in which a surface of the first housing part and a surface of the second housing part face each other, the processor may display the default screen on the cover display. For example, in the folded state, the processor may display the default screen corresponding to the AOD screen. The processor may enter a second state displaying the wallpaper screen from a first state displaying the AOD screen, based on identifying at least one input of a user input or a system input. For example, in the first state, when the processor identifies a system input indicating reception of a notification message provided from one of a plurality of software applications installed in memory, the processor may enter the second state from the first state. For example, the processor may enter the second state from the first state based on the user input including an input to at least one button (e.g., a physical button) included in the electronic device and/or a touch input on the cover display in the first state. For example, the processor may enter the second state based on identifying a change from an unfolded state, which is distinguished from the folded state, to the folded state. However, it is not limited to the above-described embodiment.

Referring to FIG. 16, in operation 1620, the processor according to an embodiment may display, overlapping the default screen, a visual object indicating execution state information for updating an operation of at least one software application being executed in the electronic device in real time or periodically, in a second area that is a partial area of the first area.

For example, the second area may include an area defined by an edge (e.g., the third edge 521-3 of FIG. 5) of the cover display having the curved shape. The second area may be referred to as an L-cut area. The processor may display a visual object in the second area and may display an icon (e.g., the icon 555 of FIG. 5) related to a camera in a third area distinguished from the second area. When the second area is located adjacent to a corner (e.g., the second corner 522-2 of FIG. 5) of the cover display, the third area may be formed adjacent to another corner (e.g., the third corner 522-3 of FIG. 5). As an example, the icon (e.g., the icon 555 of FIG. 5) may indicate an icon of a software application related to the camera. As an example, the icon may indicate at least one of a plurality of software applications installed in the electronic device 101. The electronic device 101 may display another icon indicating at least one of the plurality of software applications installed in the electronic device 101 in the third area.

For example, in the second state, the processor may provide a plurality of widgets executable through the cover display. As an example, in the second state, the processor may display a screen of one widget among the plurality of widgets based on a swipe input. As an example, in the second state, the processor may display a screen (e.g., the screen 1301 of FIG. 13) including the plurality of widgets based on identifying a pinch-zoom gesture. As an example, in the second state, the processor may display a user interface that may edit the plurality of widgets based on identifying a long-press input.

For example, in response to an input for a visual object, the processor may display a widget screen of at least one software application corresponding to the visual object on the cover display. For example, while displaying the widget screen on the cover display, the processor may at least temporarily refrain from displaying the visual object. For example, while displaying the widget screen, the processor may display the visual object and a navigation button at least partially overlapping the widget screen. The navigation button may include the icon 915 of FIG. 9 and/or the visual object 1407 of FIG. 14.

The visual object according to an embodiment may be one or more. For example, the processor may display a plurality of visual objects corresponding to each of a plurality of software applications executed by the processor in the second area of the cover display. The processor may adjust sizes of the plurality of visual objects. The processor may change the sizes and/or locations of the plurality of visual objects based on execution state information of each of the plurality of software applications. For example, the processor may change the sizes of the plurality of visual objects in response to an input (e.g., a swipe input) for changing the plurality of visual objects. As an example, at least one of the plurality of visual objects may indicate the number of the plurality of software applications.

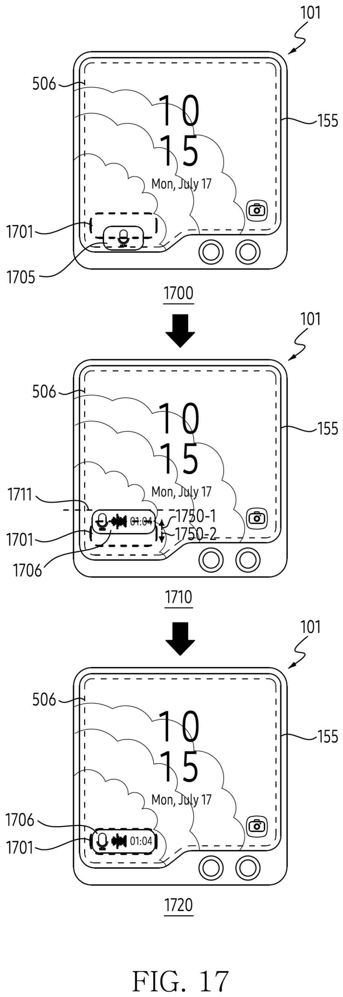

FIG. 17 illustrates an example of an operation in which an electronic device according to an embodiment displays a visual object. An electronic device 101 of FIG. 17 may include the electronic device 101 of FIGS. 1 to 16.

Referring to FIG. 17, in state 1700, the electronic device 101 according to an embodiment may display a visual object 1705 having a first size in a capsule area 1701 in a screen 506. The visual object 1705 may indicate execution of a widget. The visual object 1705 may indicate execution of a function provided from the widget. A color of the visual object 1705 may be determined based on a color provided from the widget. However, it is not limited thereto. The capsule area 1701 may be included in at least a portion of the area 510 of FIG. 5.

For example, the electronic device 101 may gradually increase a size of the visual object 1705 having the first size. For example, the electronic device 101 may obtain a visual object 1706 having a second size based on the size of the visual object 1705 gradually increasing. The second size of the visual object 1706 may be larger than the first size of the visual object 1705. For example, the electronic device 101 may gradually change a location of the visual object 1706 to a line 1711. The electronic device 101 may gradually change a location of the visual object 1705 while gradually increasing the first size of the visual object 1705 to the second size of the visual object 1706. As an example, the electronic device 101 may change the color of the visual object 1705 independently of changing the size of the visual object 1705 or changing the location of the visual object 1705. However, it is not limited thereto.

The electronic device 101 according to an embodiment may represent a visual effect for disposing the visual object 1706 in the capsule area 1701 in state 1710. For example, the electronic device 101 may alternately change the location of the visual object 1706 according to a first direction 1750-1 or a second direction 1750-2. Based on alternately changing the location of the visual object 1706 according to the first direction 1750-1 or the second direction 1750-2, the electronic device 101 may indicate a visual effect (or animation effect) in which the visual object 1706 shakes.

For example, the electronic device 101 may enter state 1720 after indicating the visual effect (or graphic effect). In the state 1720, the electronic device 101 may display the visual object 1706 in the capsule area 1701. However, it is not limited thereto.

Although not illustrated, for example, the electronic device 101 may obtain an input for temporarily refraining from displaying the visual object 1706. In response to the input, the electronic device 101 may gradually reduce the size of the visual object 1706 to the size of the visual object 1705. The electronic device 101 may gradually reduce the size of the visual object 1706 while moving the location of the visual object 1706 to match the line 1711. The electronic device 101 may obtain the visual object 1705 after gradually reducing the size of the visual object 1706. The electronic device 101 may indicate a visual effect in which display of the visual object 1705 is gradually ceased while moving the visual object 1705 to a navigation area (e.g., the navigation area 508-1 of FIG. 5). However, it is not limited thereto.

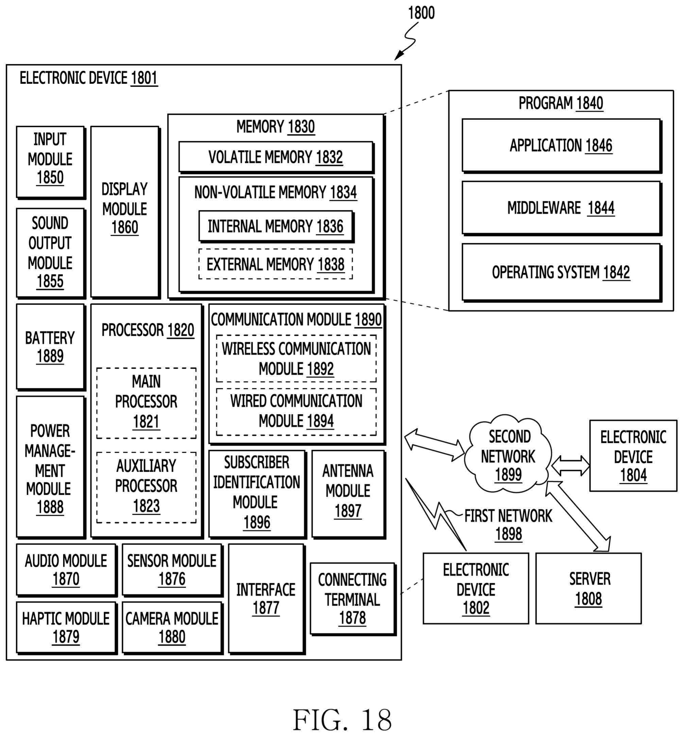

FIG. 18 is a block diagram illustrating an electronic device 1801 in a network environment 1800 according to various embodiments. Referring to FIG. 18, the electronic device 1801 in the network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module(SIM) 1896, or an antenna module 1897. In some embodiments, at least one of the components (e.g., the connecting terminal 1878) may be omitted from the electronic device 1801, or one or more other components may be added in the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, an SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 1864dB or less) for implementing mMTC, or U-plane latency (e.g., 0.5ms or less for each of downlink (DL) and uplink (UL), or a round trip of 18ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

For example, the electronic device 101 of FIG. 18 may be referred to the electronic device 101 of FIG. 1.

The electronic device according to an embodiment may display at least one of visual objects indicating execution of a plurality of software applications on an area of a cover display. A method for the electronic device to display at least one visual object among the visual objects on the area based on an execution order of the plurality of software applications may be required.

In an electronic device 101 according to an embodiment as described above, the electronic device may comprise a housing including a first housing part 210 and a second housing part 220 rotatably coupled to the first housing part 210, a flexible display 153 extending from a surface 211 of the first housing part to a surface 221 of the second housing part, a cover display 155 located on another surface 212 of the first housing part 210, the other surface 212 being opposite to the surface 211 on which the flexible display is located, and at least one processor 120. The at least one processor may be configured to display, on the cover display, a second visual object 706 indicating a first widget 137-1 among a plurality of widgets 135-1 and 137-1 provided from a plurality of software applications 135 and 137 executed by the at least one processor, together with a first visual object 625 indicating time, based on a specified condition, in a folded state 203 in which the surface of the first housing part and the surface of the second housing part face each other. The at least one processor may be configured to, based on an input for the second visual object, cease displaying the second visual object on the cover display and display a third visual object 621 corresponding to a second widget 135-1 among the plurality of widgets.

For example, the at least one processor may be configured to display the first visual object on the cover display. The at least one processor may be configured to display the second visual object in an area corresponding to a corner 522-2 among corners 522-1, 522-2, 523-2, and 524-2 of the cover display.

For example, the input may include a first input. The at least one processor may be configured to temporarily cease display of the second visual object and display the first widget on the cover display, based on the first input for the second visual object. The at least one processor may be configured to identify a second input for temporarily ceasing execution of the first software application corresponding to the first widget. The at least one processor may be configured to display the first visual object and the third visual object on the cover display, based on identifying a third input for displaying the first visual object, after identifying the second input.

For example, the at least one processor may be configured to display the first visual object and the third visual object, based on identifying the third input performed along a first direction 612 perpendicular to a direction of an edge 521-3 among edges 521-2 and 521-3 forming the corner.

For example, the at least one processor may be configured to display the first widget on the cover display and display an icon 915 for displaying the first visual object in the area, based on the first input, and display the first visual object, in response to the third input for the icon.

For example, the specified condition may be set to display the second visual object overlapping the third visual object together with the first visual object, based on executing the first software application 137 providing the first widget, after execution of the second software application 135 providing the second widget.

For example, the at least one processor may be configured to cease displaying the second visual object and display the third visual object, in response to the input performed according to a second direction 801.

For example, the plurality of widgets may be set to be displayed on the cover display based on a widget management application for managing widgets to be displayed on the cover display. The first visual object may be provided by the widget management application.

In a method of an electronic device 101 according to an embodiment as described above, the method may comprise displaying, on a cover display 155, a second visual object 706 indicating a first widget 137-1 among a plurality of widgets 135-1 and 137-1 provided from a plurality of software applications 135 and 137 executed by at least one processor, together with a first visual object 625 indicating time, based on a specified condition, in a folded state 203 where a surface 211 of a first housing part 210 of the electronic device and a surface 221 of a second housing part 220 of the electronic device face each other. The method may comprise, based on an input for the second visual object, ceasing to display the second visual object on the cover display and displaying a third visual object 621 corresponding to a second widget 135-1 among the plurality of widgets.

For example, displaying the second visual object may include displaying the first visual object on the cover display. Displaying the second visual object may include displaying the second visual object in an area corresponding to a corner 522-2 among corners 522-1, 522-2, 523-2, and 524-2 of the cover display.

For example, the input may include a first input. Displaying the third visual object may include temporarily ceasing display of the second visual object and displaying the first widget on the cover display, based on the first input for the second visual object. Displaying the third visual object may include identifying a second input for temporarily ceasing execution of the first software application corresponding to the first widget. Displaying the third visual object may include displaying the first visual object and the third visual object on the cover display, based on identifying a third input for displaying the first visual object, after identifying the second input.

For example, displaying the first visual object and the third visual object may include displaying the first visual object and the third visual object, based on identifying the third input performed along a first direction 612 perpendicular to a direction of an edge 521-3 among edges 521-2 and 521-3 forming the corner.

For example, displaying the first visual object may include displaying the first widget on the cover display and displaying an icon 915 for displaying the first visual object in the area, based on the second input. Displaying the first visual object may include displaying the first visual object, in response to the third input for the icon.

For example, the specified condition may be set to display the second visual object overlapping the third visual object together with the first visual object, based on executing the first software application 137 providing the first widget, after execution of the second software application 135 providing the second widget.

For example, displaying the third visual object may include ceasing to display the second visual object and displaying the third visual object, in response to the input performed according to a second direction 801.

In an electronic device 101 according to an embodiment as described above, the electronic device may comprise a housing including a first housing part 210 and a second housing part 220 rotatably coupled to the first housing part, a flexible display 153 extending from a surface 211 of the first housing part to a surface 221 of the second housing part, a cover display located on another surface 212 of the first housing part, the other surface 212 being opposite to the surface on which the flexible display is located, and at least one processor 120. The at least one processor may be configured to initiate execution of a first software application 135 in an unfolded state 200 that is distinguished from a folded state 203 in which the surface of the first housing part and the surface of the second housing part face each other. The at least one processor may be configured to identify whether the first software application is linked with a second software application 133 for managing widgets to be displayed on the cover display, based on identifying a change from the unfolded state to the folded state. The at least one processor may be configured to display a visual object 510 indicating execution of the first software application in an area 510 corresponding to a corner 522-2 among corners 522-1, 522-2, 522-3, and 522-4 of the cover display, in a first state 505 in which the first software application is linked with the second software application. The at least one processor may be configured to display, on the cover display, a screen 530 for linking the second software application and the first software application, in a second state 520 that is distinguished from the first state.

For example, the at least one processor may be configured to identify the first state in which the first software application is linked with the second software application, based on a first widget 135-1 of the first software application being executable using the second software application.

For example, the at least one processor may be configured to display the first widget on the cover display, in response to an input for the visual object, in the first state.

For example, the at least one processor may be configured to display the visual object on the cover display together with a wallpaper screen 506 provided by the second software application.

For example, while displaying the visual object, the at least one processor may be configured to display another visual object 721 indicating execution of a third software application related to a phone call, overlapping the visual object, based on execution of the third software application.

In a computer readable storage medium storing one or more programs according to an embodiment as described above, the one or more programs, when executed by at least one processor 120 of an electronic device 101, may be configured to display, on a cover display 155, a second visual object 706 indicating a first widget 137-1 among a plurality of widgets 135-1 and 137-1 provided from a plurality of software applications 135 and 137 executed by the at least one processor, together with a first visual object 625 indicating time, based on a specified condition, in a folded state 203 where a surface 211 of a first housing part 210 of the electronic device and a surface 221 of a second housing part 220 of the electronic device face each other. The at least one processor may be configured to, based on an input for the second visual object, cease displaying the second visual object on the cover display and display a third visual object 621 corresponding to a second widget 135-1 among the plurality of widgets.

In a method of an electronic device 101 according to an embodiment as described above, the method may include initiating execution of a first software application 135 in an unfolded state 200 that is distinguished from a folded state 203 in which a surface 211 of a first housing part 210 and a surface 221 of a second housing part 220 face each other. The method may include identifying whether the first software application is linked with a second software application 133 for managing widgets to be displayed on a cover display 155, based on identifying a change from the unfolded state to the folded state. The method may include displaying a visual object 510 indicating execution of the first software application in an area 510 corresponding to a corner 522-2 among corners 522-1, 522-2, 522-3, and 522-4 of the cover display, in a first state 505 in which the first software application is linked with the second software application. The method may include displaying, on the cover display, a screen 530 for linking the second software application and the first software application, in a second state 520 that is distinguished from the first state.

In a computer readable storage medium storing one or more programs according to an embodiment as described above, the one or more programs, when executed by at least one processor 120 of an electronic device 101, may be configured to cause the electronic device to initiate execution of a first software application 135 in an unfolded state 200 that is distinguished from a folded state 203 in which a surface 211 of a first housing part 210 and a surface 221 of a second housing part 220 face each other. The one or more programs, when executed by the at least one processor of the electronic device, may be configured to cause the electronic device to identify whether the first software application is linked with a second software application 133 for managing widgets to be displayed on a cover display 155, based on identifying a change from the unfolded state to the folded state. The one or more programs, when executed by the processor of the electronic device, may be configured to cause the electronic device to display a visual object 510 indicating execution of the first software application, in an area 510 corresponding to a corner 522-2 among corners 522-1, 522-2, 522-3, and 522-4 of the cover display, in a first state 505 in which the first software application is linked with the second software application. The one or more programs, when executed by the processor of the electronic device, may be configured to cause the electronic device to display, on the cover display, a screen 530 for linking the second software application and the first software application, in a second state 520 that is distinguished from the first state.

In an electronic device 101 according to an embodiment as described above, the electronic device may comprise a housing including a first housing part 210 and a second housing part 220 rotatably coupled to the first housing part, a flexible display 153 extending from a surface 211 of the first housing part to a surface 221 of the second housing part, a cover display 155 located on another surface 212 of the first housing part, and at least one processor 120. When instructions are executed, the at least one processor may be configured to display a default screen 1325 or 1335 in a first area of the cover display, when turning on the cover display is performed by a user input or a system input. When instructions are executed, the at least one processor may be configured to display, overlapping the default screen, a visual object 507 indicating execution state information for updating an operation of at least one software application being executed in the electronic device in real time or periodically, in a second area 510 that is a partial area of the first area.

For example, when the instructions are executed, the at least one processor may be configured to display the visual object in the second area corresponding to a corner 522-2 among corners 522-1, 522-2, 523-2, and 524-2 of the cover display.

For example, the electronic device may comprise a camera located on the other surface of the first housing part. When the instructions are executed, the at least one processor may be configured to display an icon 555 related to the camera to be adjacent to another corner 522-3 adjacent to the camera among the corners.

For example, when the instructions are executed, the at least one processor may be configured to display a widget of the at least one software application being executed, in response to an input for the visual object. When the instructions are executed, the at least one processor may be configured to at least temporarily refrain from displaying the visual object.

For example, when the instructions are executed, the at least one processor may be configured to display an icon 915 for changing from the widget to the default screen in the second area, based on at least temporarily refraining from displaying the visual object.

In a method of an electronic device 101 according to an embodiment as described above, the method may comprise, when turning on a cover display 155 is performed by a user input or a system input, displaying a default screen 1325 or 1335 in a first area of the cover display. The method may comprise displaying, overlapping the default screen, a visual object 507 indicating execution state information for updating an operation of at least one software application being executed in the electronic device in real time or periodically, in a second area 510 that is a partial area of the first area.

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., program) including one or more instructions that are stored in a storage medium (e.g., internal memory or external memory) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a housing including a first housing part (210) and a second housing part (220) rotatably coupled to the first housing part;
a flexible display (153) extending from a surface (211) of the first housing part to a surface (221) of the second housing part;
a cover display (155) located on another surface of the first housing part;
at least one processor (120) comprising processing circuitry; and
memory (130) comprising one or more storage mediums storing instructions,
wherein the instructions, when executed by the at least one processor individually or collectively, cause the electronic device to:
when turning on the cover display is performed by a user input or a system input, display a default screen (1325; 1335) in a first area of the cover display; and
display, overlapping the default screen, a visual object (507) indicating execution state information for updating an operation of at least one software application being executed in the electronic device in real time or periodically, in a second area (510) that is a partial area of the first area.

2. The electronic device of claim 1,
wherein the instructions, when executed by the at least one processor individually or collectively, cause the electronic device to:
display the visual object in the second area corresponding to a corner (522-2) among corners (522-1; 522-2; 523-2; 524-2) of the cover display.

3. The electronic device of claim 2, comprising:
a camera located on the another surface of the first housing part;
wherein the instructions, when executed by the at least one processor individually or collectively, cause the electronic device to:
display an icon (555) related to the camera to be adjacent to another corner (522-3) adjacent to the camera among the corners.

4. The electronic device of claim 1,
wherein the instructions, when executed by the at least one processor individually or collectively, cause the electronic device to:
display a widget of the at least one software application being executed, in response to an input for the visual object, and
at least temporarily refrain from displaying the visual object.

5. The electronic device of claim 4,
wherein the instructions, when executed by the at least one processor individually or collectively, cause the electronic device to:
display an icon (915) for changing from the widget to the default screen in the second area, based on at least temporarily refraining from displaying the visual object.

6. The electronic device of claim 1,
wherein the instructions, when executed by the at least one processor individually or collectively, cause the electronic device to:
display, as the visual object, together with a first visual object (625) indicating time, a second visual object (706) indicating a first widget (137-1) among a plurality of widgets (135-1; 137-1) provided from a plurality of software applications (135; 137) executed by the at least one processor, on the cover display, based on a specified condition, in a folded state (203) in which the surface of the first housing part and the surface of the second housing part face each other; and
based on an input for the second visual object, cease displaying the second visual object on the cover display and display, as the visual object, a third visual object (621) corresponding to a second widget (135-1) among the plurality of widgets.

7. The electronic device of claim 6,
wherein the instructions, when executed by the at least one processor individually or collectively, cause the electronic device to:
display the first visual object on the cover display; and
display the second visual object in the second area corresponding to a corner (522-2) among corners (522-1; 522-2; 523-2; 524-2) of the cover display.

8. The electronic device of claim 7,
wherein the input includes a first input, and
wherein the instructions, when executed by the at least one processor individually or collectively, cause the electronic device to:
temporarily cease display of the second visual object and display the first widget on the cover display, based on the first input for the second visual object,
identify a second input for temporarily ceasing execution of the first software application corresponding to the first widget; and
display the first visual object and the third visual object on the cover display, based on identifying a third input for displaying the first visual object, after identifying the second input.

9. The electronic device of claim 8,
wherein the instructions, when executed by the at least one processor individually or collectively, cause the electronic device to:
display the first visual object and the third visual object, based on identifying the third input performed along a first direction perpendicular to a direction of an edge (521-3) among edges (521-2, 521-3) forming the corner.

10. The electronic device of claim 8,
wherein the instructions, when executed by the at least one processor individually or collectively, cause the electronic device to:
based on the first input, display the first widget on the cover display and display an icon (915) for displaying the first visual object in the area, and
display the first visual object, in response to the third input for the icon.

11. The electronic device of claim 6,
wherein the specified condition is set to display the second visual object overlapping the third visual object together with the first visual object, based on executing the first software application (135) providing the first widget, after execution of the second software application (137) providing the second widget.

12. The electronic device of claim 6,
wherein the instructions, when executed by the at least one processor individually or collectively, cause the electronic device to:
cease displaying the second visual object and display the third visual object, in response to the input performed according to a second direction (801).

13. The electronic device of claim 6,
wherein the plurality of widgets is set to be displayed on the cover display based on a widget management application for managing widgets to be displayed on the cover display, and
wherein the first visual object is provided by the widget management application.

14. A method of an electronic device (101) comprises:
in a folded state (203) where a surface (211) of a first housing part (210) of the electronic device and a surface (221) of a second housing part (220) of the electronic device face each other, displaying, on a cover display (155), a second visual object (706) indicating a first widget (137-1) among a plurality of widgets (135-1; 137-1) provided from a plurality of software applications (135; 137) executed by at least one processor, together with a first visual object (625) indicating time, based on a specified condition; and
based on an input for the second visual object, ceasing to display the second visual object on the cover display and displaying a third visual object (621) corresponding to a second widget (135-1) among the plurality of widgets.

15. The method of claim 14, wherein displaying the second visual object comprises:
displaying the first visual object on the cover display; and
displaying the second visual object in an area corresponding to a corner (522-2) among corners (522-1; 522-2; 523-2; 524-2) of the cover display.
